(19) Europäisches Patentamt
European Patent Office
Office européen des brevets

(11) **EP 2 137 032 B1**

(12) **EUROPÄISCHE PATENTSCHRIFT**

(45) Veröffentlichungstag und Bekanntmachung des Hinweises auf die Patenterteilung:
**22.12.2010  Patentblatt 2010/51**

(21) Anmeldenummer: **08708922.3**

(22) Anmeldetag: **12.02.2008**

(51) Int Cl.:
***B60R 22/28*** *(2006.01)*    ***B60R 22/18*** *(2006.01)*

(86) Internationale Anmeldenummer:
**PCT/EP2008/051691**

(87) Internationale Veröffentlichungsnummer:
**WO 2008/098941 (21.08.2008 Gazette 2008/34)**

(54) **SCHLOSSUMLENKEINRICHTUNG**

BUCKLE DEVICE

DISPOSITIF DE VERROUILLAGE À RENVOI

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.02.2007  DE 102007007702**
**28.09.2007  DE 102007047549**

(43) Veröffentlichungstag der Anmeldung:
**30.12.2009  Patentblatt 2009/53**

(60) Teilanmeldung:
**10182059.5**

(73) Patentinhaber: **Takata-Petri AG**
**63743 Aschaffenburg (DE)**

(72) Erfinder:
• **WENDT, Mario**
**14473 Potsdam (DE)**
• **VIDOLOV, Kliment**
**14055 Berlin (DE)**

(74) Vertreter: **Müller, Wolfram Hubertus et al**
**Patentanwälte**
**Maikowski & Ninnemann**
**Postfach 15 09 20**
**10671 Berlin (DE)**

(56) Entgegenhaltungen:
DE-A1- 10 210 781     DE-C1- 3 233 797
DE-U1- 20 303 549     GB-A- 2 349 615

**Beschreibung**

Die Erfindung betrifft eine Schlossumlenkeinrichtung für ein Kraftfahrzeug, mit einer Schlosszunge zum Einstecken in eine Schlossschnalle und einem mit der Schlosszunge gekoppelten Umlenkkörper, der dazu ausgebildet ist, einen Sicherheitsgurt in ein Schultersegment und ein Beckensegment zu unterteilen und derart umzulenken, dass die beiden Segmente in unterschiedlichen Richtungen vom Umlenkkörper abgehen. Eine solche Schlossumlenkreinrichtung ist aus der DE 32 33 797 C1 bekannt.

Der Erfindung liegt das Problem zugrunde, eine verbesserte Schlossumlenkeinrichtung bereitzustellen.

Dieses Problem wird durch eine Schlossumlenkeinrichtung mit den Merkmalen des Anspruchs 1 gelöst.

Danach ist vorgesehen, dass der Umlenkkörper über zumindest ein längs erstrecktes Element mit der Schlosszunge verbunden ist, das zumindest abschnittsweise um den Umlenkkörper gewickelt ist, wobei das längs erstreckte Element bevorzugt zumindest abschnittsweise eng am Umlenkkörper anliegt. Vorzugsweise ist das mindestens eine längs erstreckte Element durch eine am Schultersegment angreifende Kraft vom Umlenkkörper abwickelbar, um die resultierende, an dem Schultersegment angreifende Kraft zu begrenzen. Oder anders gesagt, der Umlenkkörper wird durch am Schultersegment angreifende Kräfte in eine Rotation versetzt, bei der sich das längs erstreckte Element vom Umlenkkörper abwickelt.

Bevorzugt wird das mindestens eine längs erstreckte Element durch eine am Schultersegment angreifende Kraft vom Umlenkkörper unter Verformung abgerollt, um die resultierende, an dem Schultersegment angreifende Kraft zu begrenzen. Diese wird beim Verformen des längs erstreckten Elementes absorbiert.

Vorzugsweise erstreckt sich der Umlenkkörper entlang einer Erstreckungsrichtung. Bei einem Umlenkkörper in Form einer Rolle verläuft jene Erstreckungsrichtung parallel zur Rotationsachse (Zylinderachse) des rollenförmigen Umlenkkörpers. Dabei ist das mindestens eine längs erstreckte Element quer zu der Erstreckungsrichtung des Umlenkkörpers um den Umlenkkörper herumgewickelt, und zwar bevorzugt um einen freien Endabschnitt des Umlenkkörpers. Dieser Endabschnitt ist vorzugsweise über einen mittleren Abschnitt des Umlenkkörpers mit einem weiteren freien Endabschnitt des Umlenkkörpers verbunden, der dem anderen Endabschnitt des Umlenkkörpers entlang der Erstreckungsrichtung des Umlenkkörpers gegenüber liegt. Die drei Abschnitte sind vorzugsweise einstückig aneinander angeformt.

Die beiden Endabschnitte und der mittlere Abschnitt weisen je eine Querschnittsfläche auf, wobei die Querschnittsflächen der Endabschnitte vorzugsweise deckungsgleich ausgebildet sind, und wobei die beiden Endabschnitte und der mittlere Abschnitt entlang der Erstreckungsrichtung vorzugsweise einen konstanten Querschnitt aufweisen, und zwar sowohl hinsichtlich der Querschnittskontur als auch hinsichtlich der Querschnittsfläche.

In einer Variante der Erfindung sind die Querschnittsflächen der Endabschnitte des Umlenkkörpers jeweils größer als die Querschnittsfläche des mittleren Abschnitts des Umlenkkörpers. In zwei weiteren Varianten der Erfindung sind die Querschnittsflächen der Endabschnitte entweder jeweils gleich der Querschnittsfläche des mittleren Abschnitts bzw. jeweils kleiner als die Querschnittsfläche des mittleren Abschnitts des Umlenkkörpers. Unter der Querschnittsfläche ist dabei eine Querschnittsfläche zu verstehen, die senkrecht zur Erstreckungsrichtung des Umlenkkörpers verläuft.

Durch das Verhältnis der Querschnittsfläche eines Endabschnittes zur Querschnittsfläche des mittleren Bereiches lässt sich die Kraft kontrollieren, die zum Abwickeln des mindestens einen längs erstreckten Elementes vom Umlenkkörper in den Umlenkkörper eingeleitet werden muss. Entscheidend ist dabei, dass durch die unterschiedlichen Querschnitte (bei kreisförmigen Querschnitten einer Umlenkrolle werden diese allein durch den normal auf der Zylinderachse stehenden Radius der Umlenkrolle bestimmt) der Abstand zwischen demjenigen Punkt, über den die Endabschnitte (im Querschnitt betrachtet) beim Abwickeln der längs erstreckten Elemente abrollen (Abrollpunkt) und demjenigen Punkt, von dem das Schultersegment (im Querschnitt betrachtet) vom mittleren Abschnitt der Umlenkrolle abgeht bzw. demjenigen Punkt von dem das Beckensegment (im Querschnitt betrachtet) vom mittleren Abschnitt der Umlenkrolle abgeht, variiert wird.

Für den Fall, dass bei einer Umlenkrolle, deren Abschnitte (Endabschnitte, mittlere Abschnitt) eine gemeinsame Zylinderachse (Rotationsachse) aufweisen, die Querschnittsflächen der Endabschnitte jeweils so groß sind wie die Querschnittsfläche des mittleren Abschnittes, bedeutet dies, dass lediglich eine am Schultersegment angreifende Kraft (und zwar deren entlang des Schultersegmentes erstreckte Komponente) die Rotation der Umlenkrolle (unter Abwickeln der längs erstreckten Elemente) bewirkt, sofern sie die Schwellenkraft übersteigt, da nur diese Komponente einen Hebelarm bezüglich des Abrollpunktes aufweist, über den ein Moment zum Abwickeln der längs erstreckten Elemente in die Umlenkrolle eingeleitet werden kann.

Für den Fall, dass der mittlere Abschnitt des Umlenkkörpers eine Querschnittsfläche aufweist, die jeweils kleiner ist als die Querschnittsflächen der Endabschnitte des Umlenkkörpers, ziehen sowohl die am Schultersegment angreifende Kraft als auch eine am Beckensegment angreifende Kraft (und zwar deren entlang des Beckensegmentes erstreckte Komponente) in dieselbe Richtung. Hier weisen beide in den jeweiligen Gurtsegmenten wirkende Kraftkomponenten einen Hebelarm bezüglich des Abrollpunktes auf, über den ein die längs erstreckenden Elemente abwickelndes Moment an der Umlenkrolle erzeugt werden kann.

Für den Fall jedoch, dass die Endabschnitte jeweils eine Querschnittsfläche aufweisen, die kleiner ist als die Querschnittsfläche des mittleren Abschnittes, bewirkt die am Schultersegment angreifende Kraft, sofern sie die Schwellenkraft übersteigt, eine Rotation der Umlenkrolle, wohingegen die am Beckensegment angreifende Kraft dieser Rotation entgegen wirkt. Beide in den jeweiligen Gurtsegmenten wirkende Kraftkomponenten weisen hier Hebelarme bezüglich des Abrollpunktes auf, über den an der Umlenkrolle entgegengesetzt wirkende Momente erzeugt werden können.

Bevorzugt sind die beiden freien Endabschnitte des Umlenkkörpers jeweils zylinderförmig ausgebildet und weisen eine gemeinsame, mit der Erstreckungsrichtung zusammenfallende Zylinderachse auf. Vorzugsweise ist der mittlere Abschnitt des Umlenkkörpers ebenfalls zylinderförmig ausgebildet, wobei dessen Zylinderachse bevorzugt mit der Zylinderachse der Endabschnitte des Umlenkkörpers zusammenfällt.

In einer alternativen Ausführungsform weist der mittlere Abschnitt einen längs erstreckten Querschnitt auf, insbesondere in Form eines Ovals oder einer Ellipse. Unter einem längs erstreckten Querschnitt wird eine Querschnittsform verstanden, die entlang einer ersten Richtung (Längsachse der Querschnittsfläche) eine größere Ausdehnung aufweist als entlang einer quer zur ersten Richtung orientierten zweiten Richtung. Der mittlere Abschnitt des Umlenkkörpers bildet auf diese Weise einen Hebel, dessen veränderbare Länge von der Winkellage des mittleren Abschnitts im Raum abhängt. Hierdurch wird beim Rotieren des mittleren Abschnitts um die Rotationsachse die in das mindestens eine längs erstreckte Element eingeleitete Kraft variiert. Durch die Querschnittsform des mittleren Abschnittes kann somit der Betrag der in das mindestens eine längs erstreckte Element eingeleiteten Kraft (weg- bzw. zeitabhängig) gesteuert werden. Dies ist auch möglich, wenn sowohl die Querschnitte der Endabschnitte als auch der Querschnitt des mittleren Abschnittes längs erstreckt ausgebildet sind. Entscheidend für die Variation der auf die längs erstreckten Elemente durch die am Schultersegment angreifenden Kräfte ausgeübten Kräfte ist jeweils der diesbezügliche effektive Hebelarm des mittleren Abschnittes des Umlenkkörpers. Die Länge dieses Hebelarms wird durch den Abstand zwischen demjenigen Punkt, von dem - im Querschnitt betrachtet - das Schultersegment vom mittleren Abschnitt des Umlenkkörpers abgeht und demjenigen Punkt, über den - im Querschnitt betrachtet - die Endabschnitte beim Abwickeln der längs erstreckten Elemente abrollen, bestimmt. Entsprechendes gilt für die am Beckensegment angreifenden Kräfte.

Bevorzugt ist der Umlenkkörper über zumindest ein zusätzliches Deformationselement mit der Schlosszunge verbunden, das beim Abwickeln des mindestens einen längs erstreckten Elementes vom Umlenkkörper unter Absorption von Energie deformiert wird. In einer Variante der Erfindung wird das mindestens eine Deformationselement vorzugsweise elastisch oder plastisch (inelastisch) deformiert. In einer weiteren Variante der Erfindung ist vorgesehen, dass das mindestens eine Deformationselement beim Abwickeln des mindestens einen längs erstreckten Elementes vom Umlenkkörper unter Absorption von Energie um zumindest eine quer zu einer Erstreckungsrichtung des Deformationselementes orientierte Achse umgebogen wird. Gegebenenfalls kann das Deformationselement um mehrere zueinander beabstandete Achsen umgebogen werden. Bei der Achse kann es sich um eine fiktive Achse handeln. In diesem Fall ist das Deformationselement bevorzugt in Form einer Schlaufe angeordnet. Alternativ hierzu kann die besagte Achse durch einen Körper gebildet sein, um den das Deformationselement herumgelegt ist. Hierbei wird das insbesondere stiftförmig ausgebildete Deformationselement beim Abwickeln des mindestens einen längs erstreckten Elementes vom Umlenkkörper bevorzugt unter Absorption von Energie aus einer an der Schlosszunge oder dem Umlenkkörper vorgesehenen Aussparung herausgezogen.

Für den Fall, dass das Deformationselement nicht aus einer Aussparung herausgezogen wird, kann das Deformationselement mit einem Endabschnitt über eine Schwachstelle mit der Schlosszunge verbunden sein, die beim Abwickeln des mindestens einen längs erstreckten Elementes vom Umlenkkörper unter Absorption von Energie einreißt.

Des Weiteren kann das mindestens eine längs erstreckte Element über eine derartige Schwachstelle mit dem Umlenkkörper verbunden sein, wobei jene Schwachstelle beim Abwickeln des mindestens einen längs erstreckten Elementes vom Umlenkkörper unter Absorption von Energie einreißt.

Weiterhin ist der Umlenkkörper bevorzugt über ein weiteres längs erstrecktes Element mit der Schlosszunge verbunden, das zumindest abschnittsweise um den Umlenkkörper herumgewickelt ist. Dieses weitere längs erstreckte Element wird dabei in gleicher Weise wie das andere längs erstreckte Element durch eine vorbestimmbare am Schultersegment angreifende Kraft vom Umlenkkörper abgewickelt, wobei die resultierende, an dem Schultersegment angreifende Kraft begrenzt wird, da die Umlenkrolle durch ihre Abrollbewegung das Schultersegment entlastet.

Das weitere längs erstreckte Element ist bevorzugt um den weiteren Endabschnitt des Umlenkkörpers gewickelt, so dass der Sicherheitsgurt entlang des Umlenkkörpers zwischen den beiden längs erstreckten Elementen um den mittleren Abschnitt des Umlenkkörpers herum gelegt ist.

Zur Anlage des Sicherheitsgurtes am Umlenkkörper weist dieser einen Anlagebereich auf, um den der Sicherheitsgurt herum gelegt ist und an dem der Sicherheitsgurt entlang gleiten kann. Der Anlagebereich ist bevorzugt am mittleren Abschnitt des Umlenkkörpers vorgesehen und ist vorzugsweise dazu eingerichtet und vorgesehen, derart mit dem Sicherheitsgurt zusammenzuwirken, dass bei einer am Schultersegment angreifenden Kraft, die größer gleich einer vorbestimmbaren Schwellenkraft ist, der um den Anlagebereich herum gelegte Sicherheitsgurt den Umlenkkörper durch einen Reibschluss zu einer Drehbewegung um die Zylinderachse (Rotationsachse) mitnimmt, wobei das mindestens eine längs erstreckte Element vom Umlenkkörper abgewickelt wird.

Dabei ist jene Reibung zwischen dem Anlagenbereich und dem Sicherheitsgurt bei einer am Schultersegment angreifenden Kraft, die geringer ist als die besagte Schwellenkraft, derart beschaffen, dass ein Entlanggleiten des Sicherheitsgurtes am Umlenkkörper möglich ist, ohne dass dieser durch den Sicherheitsgurt mitgenommen wird und seine Abrollbewegung vollführt.

Vorzugsweise weist der Anlagebereich eine erste und eine zweite Anlagefläche auf, wobei der Sicherheitsgurt bevorzugt bei einer am Schultersegment angreifenden Kraft, die kleiner als die Schwellenkraft ist, lediglich an der ersten Anlagefläche anliegt, und wobei der Sicherheitsgurt bei einer am Schultersegment angreifenden Kraft, die größer gleich jener Schwellenkraft ist, zusätzlich zur Anlage an die zweite Anlagefläche gelangt.

Dabei herrscht zwischen der zweiten Anlagefläche und dem Sicherheitsgurt bevorzugt eine Reibung, die ein Mitnehmen des Umlenkkörpers durch den Sicherheitsgurt bewirkt, wenn der Sicherheitsgurt an der zweiten Anlagefläche anliegt. Demgegenüber herrscht zwischen der ersten Anlagefläche und dem Sicherheitsgurt eine Reibung, die ein Entlanggleiten des Sicherheitsgurtes am Umlenkkörper ohne Mitnahme des Umlenkkörpers durch den Sicherheitsgurt erlaubt (d.h., die längs erstreckten Elemente werden nicht vom Umlenkkörper abgewickelt), wenn der Sicherheitsgurt an der ersten Anlagefläche anliegt.

In einer Ausführungsform der Erfindung ist die erste Anlagefläche durch eine dem Sicherheitsgurt zugewandte Oberfläche zumindest eines am Umlenkkörper, insbesondere am mittleren Abschnitt des Umlenkkörpers gelagerten, bewegbaren Elementes gebildet, wobei die zweite Anlagefläche durch eine dem Sicherheitsgurt zugewandte Oberfläche des mittleren Abschnittes des Umlenkkörpers gebildet ist. Im Falle eines zylinderförmigen mittleren Abschnittes weist die zweite Anlagefläche somit die Form eines Zylindermantels auf.

Vorzugsweise ist das bewegbare Element dazu eingerichtet und vorgesehen, aus einer ersten Position in eine zweite Position bewegt zu werden, wobei in der ersten Position die erste Anlagefläche des bewegbaren Elementes entlang einer Normalen der zweiten Anlagefläche über jene zweite Anlagefläche hinaussteht, so dass der um den mittleren Abschnitt des Umlenkkörpers herum gelegte Sicherheitsgurt in der ersten Position des bewegbaren Elementes lediglich an der ersten Anlagefläche anliegen kann und den mittleren Abschnitt des Umlenkkörpers beabstandet zur zweiten Anlagefläche umgreift. In der zweiten Position des bewegbaren Elementes ist dieses bevorzugt in einer Ausnehmung des Umlenkkörpers angeordnet, so dass der Sicherheitsgurt flächig auf der zweiten Anlagefläche zu liegen kommt. Vorzugsweise wird das bewegbare Element formschlüssig durch die Ausnehmung geführt, wobei sich jene Ausnehmung vorzugsweise quer zur Erstreckungsrichtung des Umlenkkörpers erstreckt und zwar vorzugsweise in radialer Richtung des Umlenkkörpers, so dass das bewegbare Element in seiner ersten Position quer zur Erstreckungsrichtung des Umlenkkörpers aus diesem herausstehen kann. Hierbei wird die erste Anlagefläche durch eine der zweiten Anlagefläche abgewandte Stirnseite des bewegbaren Elementes gebildet, die in der zweiten Position des bewegbaren Elementes stufenlos in die zweite Anlagefläche übergehen kann.

Die Bewegung des bewegbaren Elementes aus der ersten in die zweite Position erfolgt, wenn in den an der ersten Anlagefläche anliegenden Sicherheitsgurt eine Kraft eingeleitet wird, die die besagte Schwellenkraft übersteigt.

In einer Variante der Erfindung stützt sich das bewegbare Element über ein Federelement am Umlenkkörper ab. Dieses Federelement ist bevorzugt in der dem bewegbaren Element zugeordneten Ausnehmung des Umlenkkörpers angeordnet. Über die Federkonstante des Federelementes ist die Schwellenkraft einstellbar, mit der der Sicherheitsgurt gegen die erste Anlagefläche drücken muss, um zusätzlich zur Anlage an die zweite Anlagefläche zu gelangen.

In einer anderen Ausführungsform ist das bewegbare Element selbst elastisch oder inelastisch deformierbar ausgebildet, so dass es durch den gegen die erste Anlagefläche des bewegbaren Elementes drückenden Sicherheitsgurt aus der ersten Position in die zweite Position deformiert werden kann, und zwar dann, wenn die in das Schultersegment des Sicherheitsgurtes eingeleitete Kraft die besagte Schwellenkraft übersteigt.

In einer weiteren Variante ist das bewegbare Element starr ausgebildet und durch ein Verbindungsmittel in der ersten Position am Umlenkkörper festgelegt. Vorzugsweise ist dieses Verbindungsmittel dazu eingerichtet und vorgesehen, zum Bewegen des bewegbaren Elementes in die zweite Position abgeschert zu werden, wenn eine an dem Schultersegment angreifende Kraft jene Schwellenkraft übersteigt und der Sicherheitsgurt deshalb mit hinreichender Kraft das bewegbare Element in die zugeordnete Ausnehmung des Umlenkkörpers drückt.

In einer alternativen Variante der Erfindung bewirkt das Verbindungsmittel eine Rastverbindung zwischen dem Umlenkkörper und dem bewegbaren Element, wobei jene Rastverbindung insbesondere durch eine Kugel gebildet ist, die durch ein Federelement, insbesondere in Form einer Blattfeder, in eine am bewegbaren Element ausgebildete Aussparung des durch die besagte Ausnehmung geführten bewegbaren Elementes gedrückt wird, und zwar quer zu Bewegungsrichtung des bewegbaren Elementes, so dass dieses in seiner ersten Position am Umlenkkörper festgelegt wird. Wird das bewegbare Element mit ausreichender Kraft durch den Sicherheitsgurt in die Ausnehmung gedrückt, etwa wenn an dem Schultergurt eine Kraft angreift, die oberhalb der Schwellenkraft liegt, so wird die Kugel aus der Aussparung gedrängt und das bewegbare Element kann sich in seine zurückgezogenen zweite Position bewegen, in der der Sicherheitsgurt flächig an der zweiten Anlagefläche anliegt.

In einer Ausführungsform der Erfindung ist das bewegbare Element als ein Stift ausgebildet, der in einer entsprechenden Ausnehmung des Umlenkkörpers formschlüssig geführt ist. Vorzugsweise erstreckt sich das bewegbare Element in einer alternativen Variante - bezogen auf die Erstreckungsrichtung des Umlenkkörpers - entlang der gesamten Breite des mittleren Abschnittes des Umlenkkörpers.

In einer alternativen Ausführungsform der Erfindung ist das bewegbare Element als eine die Ausnehmung überdeckende Blattfeder ausgebildet, mit einer dem Sicherheitsgurt zugewandten Oberfläche, die die erste Anlagefläche bildet. Vorzugsweise ist die Blattfeder in ihrer ersten Position zum Sicherheitsgurt hin gewölbt, so dass sie mit ihrer ersten Anlagefläche aus der Ausnehmung heraussteht, wobei die erste Anlagefläche an einem umlaufenden, äußersten Rand der ersten Anlagefläche bündig, d.h., stufenlos, in die umgebende, am Umlenkkörper ausgebildete zweite Anlagefläche übergeht. In der ersten Position liegt der Sicherheitsgurt deshalb lediglich an der herausgewölbten ersten Anlagefläche der Blattfeder an und kann daher am Umlenkkörper entlanggleiten. Übersteigt die am Schultersegment angreifende Kraft die vorbestimmbare Schwellenkraft, drückt der Sicherheitsgurt die Blattfeder in die darunter liegende Ausnehmung des Umlenkkörpers, d.h., die Wölbung der Blattfeder kehrt sich um, so dass die Wölbung in der zweiten Position in die Ausnehmung hinein steht. Nun liegt der Sicherheitsgurt flächig an der die Ausnehmung berandenden zweiten Anlagefläche an und nimmt die Umlenkrolle mit. Die Bewegung der Blattfeder aus der ersten in die zweite Position entspricht also einer Umkehrung der Wölbung der Blattfeder (durch elastische Deformation der Blattfeder).

Es können natürlich auch eine Mehrzahl der vorstehend beschriebenen bewegbaren Elemente vorgesehen sein. Diese sind vorzugsweise entlang des Umlenkkörpers verteilt angeordnet und vorzugsweise jeweils entlang einer Normalen der zweiten Anlagefläche beweglich am Umlenkkörper gelagert. Vorzugsweise sind die bewegbaren Elemente über diejenige Fläche der zweiten Anlagefläche insbesondere gleichmäßig verteilt, die der Sicherheitsgurt in der zweiten Position der bewegbaren Elemente berührt.

In einer weiteren Variante der Erfindung erstreckt sich das bewegbare Element entlang des Umlenkkörpers, insbesondere in Form einer elastischen Drahtklammer, die durch den daran anliegenden Sicherheitsgurt kontinuierlich aus der ersten Position, in der der Sicherheitsgurt an der Drahtklammer entlang gleitet, in die zweite Position gedrückt werden kann, in der die Drahtklammer in der zugeordneten Ausnehmung des Umlenkkörpers versenkt ist. Die Ausnehmung weist also entlang der Oberfläche (zweite Anlagefläche) des Umlenkkörpers einen der Drahtklammer entsprechenden Verlauf auf, so dass die an der Drahtklammer ausgebildete erste Anlagefläche entlang einer Normalen der zweiten Anlagefläche zumindest bis auf das Niveau der zweiten Anlagefläche zurücktritt, wenn die Drahtklammer in der besagten Ausnehmung des Umlenkkörpers versenkt ist (zweite Position). Das Bewegen der Drahtklammer aus der ersten in die zweite Position erfolgt durch den am ersten Anlagebereich (also an der Drahtklammer) anliegenden Sicherheitsgurt. Übersteigt nämlich die am Schultersegment angreifende Kraft die besagte Schwellkraft drückt der Sicherheitsgurt die Drahtklammer entgegen deren Rückstellkraft in jene der Drahtklammer zugeordnete Ausnehmung des Umlenkkörpers, die zur Aufnahme der Drahtklammer dient.

Vorzugsweise umgreift das bewegbare Element (z.B. in Form der Drahtklammer) den Umlenkkörper im Querschnitt, so dass der Sicherheitsgurt in der ersten Position des bewegbaren Elementes über die gesamte Fläche der zweiten Anlagefläche von dieser entfernt gehalten werden kann.

Hierzu weist das bewegbare Element entlang der Oberfläche (zweite Anlagefläche) des Umlenkkörpers einen rechteckförmigen Verlauf auf, mit ersten Abschnitten die entlang der Erstreckungsrichtung des Umlenkkörpers verlaufen und quer zu diesen ersten Abschnitten verlaufenden zweiten Abschnitten, die je zwei entlang der Erstreckungsrichtung verlaufende erste Abschnitte miteinander verbinden und dabei den Umlenkkörper quer zur Erstreckungsrichtung des Umlenkkörpers zumindest abschnittsweise umgreifen.

In einem weiteren Ausführungsbeispiel der Erfindung steht die erste Anlagefläche entlang einer Normalen der zweiten Anlagefläche statisch über die zweite Anlagefläche hinaus, so dass der Gurt bei einer am Schultersegment angreifenden Kraft, die kleiner als die vorbestimmbare Schwellenkraft ist, lediglich an der ersten Anlagefläche anliegt, wohingegen der Sicherheitsgurt bei einer am Schultersegment angreifenden Kraft, die größer gleich jener Schwellenkraft ist, sich derart deformiert, dass er sich eng an die zweite Anlagefläche (und die erste Anlagefläche) anschmiegt.

Die erste Anlagefläche wird hierbei durch einen vom Umlenkkörper abragenden Steg bereitgestellt, und zwar durch dessen dem Umlenkkörper abgewandten Oberfläche, die dem Sicherheitsgurt zugewandt ist.

Bevorzugt umläuft der Steg am Umlenkkörper quer zur Erstreckungsrichtung ringförmig, wobei vorzugsweise eine Mehrzahl an solchen Stegen vorgesehen sind, die entlang der Erstreckungsrichtung beabstandet zueinander am Umlenkkörper umlaufen. Hierdurch werden am Umlenkkörper umlaufende Vertiefungen gebildet, deren Böden jeweils Teile der zweiten Anlagefläche bilden. Greift an dem Schultersegment eine Kraft an, die die vorbestimmbare Schwellenkraft übersteigt, so zieht sich der Sicherheitsgurt in jene Vertiefungen hinein und kommt zusätzlich zur Anlage an die zweite Anlagefläche, die die Reibung zwischen Gurt und Umlenkkörper solchermaßen erhöht, dass der Sicherheitsgurt den Umlenkkörper mitnimmt, wobei das mindestens eine längs erstreckte Element vom Umlenkkörper abgerollt wird.

In einer alternativen Variante erstreckt sich der Steg spiralförmig um den Umlenkkörper herum, so dass die erste Anlagefläche erste Abschnitte aufweist, die entlang derjenigen Richtung orientiert sind, entlang der das Schultersegment vom Umlenkkörper abgeht, sowie zweite Abschnitte, die entlang derjenigen Richtung orientiert sind, entlang der das Beckensegment vom Umlenkkörper abgeht.

Vorzugsweise sind die vorgenannten Stege einstückig an den Umlenkkörper angeformt und bilden daher vorzugsweise einen integralen Bestandteil des Umlenkkörpers.

Vorzugsweise sind die längs erstreckten Elemente einstückig an die Schlosszunge angeformt und bestehen wie die Schlosszunge vorzugsweise aus einem Metall.

Ebenso besteht der Umlenkkörper vorzugsweise aus einem Metall. Der erhöhte Reibkoeffizient der zweiten Anlagefläche des Umlenkkörpers wird vorzugsweise durch eine Strukturierung der zweiten Anlagefläche erreicht. D.h., die zweite Anlagefläche weist eine Vielzahl von kleinen Erhebungen auf, die die effektive Oberfläche der zweiten Anlagefläche gegenüber der ersten Anlagefläche signifikant erhöhen und damit auch die Reibung zwischen dem Sicherheitsgurt und der zweiten Anlagefläche der Umlenkrolle

Vorzugsweise sind die Erhebungen zackenförmig (dreieckförmig) ausgebildet (Sperrnasen), wobei die Erhebungen bevorzugt im Querschnitt zwei spitzwinklig aufeinander zulaufende Seiten aufweisen, die in Bezug auf eine Normale der zweiten Anlagefläche jedoch eine unterschiedliche Steigung aufweisen können, d.h., die Erhebungen (Sperrnasen) sind bevorzugt richtungsabhängig ausgebildet, und zwar derart, dass einer Relativbewegung zwischen dem Umlenkkörper und dem Sicherheitsgurt infolge einer über das Beckensegment eingeleiteten Kraft ein größerer Widerstand entgegengesetzt wird als bei einer über das Schultersegment eingeleiteten Kraft. Die Erhebungen können in Strukturen des - in der Regel aus einzelnen Fasern hergestellten - Sicherheitsgurtes eingreifen bzw. diese hintergreifen, so dass zwischen dem Sicherheitsgurt und den Erhebungen der zweiten Anlagefläche eine formschlüssige Verbindung hergestellt wird, wenn der Sicherheitsgurt mit einer vorbestimmbaren Schwellenkraft gegen die zweite Anlagefläche drückt. Bevorzugt sind die Spitzen der Erhebungen abgeflacht, um den Sicherheitsgurt nicht zu sehr zu beanspruchen.

Weitere Merkmale und Vorteile der Erfindung werden bei der nachfolgenden Beschreibung von Ausführungsbeispielen anhand der Figuren verdeutlicht. Es zeigen:

Fig.1: eine schematische Schnittdarstellung der an einem Umlenkkörper wirkenden Kräfte $F_{Schulter}$ und $F_{Becken}$;

Fig. 2-3: eine weitere schematische Schnittdarstellung des in der Figur 1 dargestellten Umlenkkörpers, mit einer zusätzlichen Einspannung des Umlenkkörpers in Form einer Verbindung des Umlenkkörpers mit einer Fahrzeugtragstruktur;

Fig. 4: eine weitere schematische Schnittdarstellung des in den Figuren 1 bzw. 3 dargestellten Umlenkkörpers, mit einer zusätzlichen Verbindung zwischen der Umlenkrolle und der Fahrzeugtragstruktur über ein elastisch deformierbares Deformationselement (Feder);

Fig. 5: eine perspektivische Ansicht einer erfindungsgemäßen Schlossumlenkeinrichtung, bei der ein Umlenkkörper über um den Umlenkkörper herumgewickelte längs erstreckte Elemente mit einer Schlosszunge verbunden ist, wobei der Umlenkkörper über zusätzliche dehnbare Deformationselemente mit der Schlosszunge verbunden ist;

Fig. 6: eine schematische Schnittdarstellung einer Abwandlung der in der Figur 5 gezeigten Schlossumlenkeinrichtung, mit Deformationselementen in Form von ausziehbaren Stiften;

Fig. 7: eine schematische Schnittdarstellung einer Abwandlung der in der Figur 5 bzw. 6 gezeigten Schlossumlenkeinrichtung, bei der das Deformationselement als eine verbiegbare Lasche ausgeformt ist;

Fig. 8: eine perspektivische Ansicht einer Abwandlung der in der Figur 5 gezeigten Schlossumlenkeinrichtung;

Fig.9-10: eine schematische Schnittdarstellung eines Umlenkkörpers einer erfindungsgemäßen Schlossumlenkeinrichtung, mit einem um den Umlenkkörper herum gelegten Sicherheitsgurt, wobei der Umlenkkörper eine erste und eine zweite Anlagefläche aufweist, und wobei der Reibungskoeffizient der zweiten Anlagefläche größer ist als der der ersten Anlagefläche;

Fig.11-12: eine schematische Schnittdarstellung eines Umlenkkörpers einer erfindungsgemäßen Schlossumlenkeinrichtung, mit daran elastisch gelagerten bewegbaren Elementen, deren Stirnseiten die erste Anlagefläche bilden;

Fig. 13-14: eine schematische Schnittdarstellung einer Abwandlung des in den Figuren 11 und 12 dargestellten Umlenkkörpers;

Fig. 15-16: eine schematische Schnittdarstellung einer weiteren Abwandlung des in den Figuren 11 und 12 dargestellten Umlenkkörpers, wobei die bewegbaren Elemente mittels einer abscherbaren Verbindung mit dem Umlenkkörper verbunden sind;

Fig. 17-18:    eine schematische Schnittdarstellung einer weiteren Abwandlung des in den Figuren 11 und 12 dargestellten Umlenkkörpers, bei dem die bewegbaren Elemente mittels einer Rastverbindung in einer ausgerückten Stellung am Umlenkkörper festgelegt sind;

Fig. 19-20:    eine schematische Schnittdarstellung einer weiteren Abwandlung des in den Figuren 11 und 12 dargestellten Umlenkkörpers, bei dem die bewegbaren Elemente als Blattfedern ausgebildet sind;

Fig. 21-22:    eine schematische Schnittdarstellung einer weiteren Abwandlung des in den Figuren 11 und 12 dargestellten Umlenkkörpers, bei dem ein bewegbares Element in Form einer Drahtklammer vorgesehen ist;

Fig. 23-24:    eine schematische Schnittdarstellung einer weiteren Abwandlung des in den Figuren 11 und 12 dargestellten Umlenkkörpers, mit bezüglich des Umlenkkörpers unbeweglichen ersten Anlageflächen;

Fig. 25-26:    eine schematische Schnittdarstellung einer weiteren Abwandlung des in den Figuren 23 und 24 dargestellten Umlenkkörpers;

Fig. 27-29:    eine schematische Schnittdarstellung eines Umlenkkörpers, der zwei Endabschnitte aufweist, die über einen mittleren Abstand miteinander verbunden sind, wobei der mittlere Abschnitt einen ovalen Querschnitt aufweist;

Fig. 30-31:    eine schematische Schnittdarstellung eines Umlenkkörpers, der zwei Endabschnitte aufweist, die über einen mittleren Abstand miteinander verbunden sind, wobei sowohl die Endabschnitte als auch der mittlere Abschnitt einen ovalen Querschnitt aufweisen;

Fig. 32-34:    eine schematische Schnittdarstellung eines Umlenkkörpers in Form einer Rolle, wobei der mittlere Abschnitt des Umlenkkörpers einen Durchmesser aufweist, der gleich, kleiner oder größer ist als der Durchmesser der beiden Endabschnitte des Umlenkkörpers; und

Fig. 35-37:    perspektivische Ansichten einer erfindungsgemäßen Schlossumlenk- einrichtung, mit einem Umlenkkörper der in den Figuren 25 und 26 gezeigten Art.

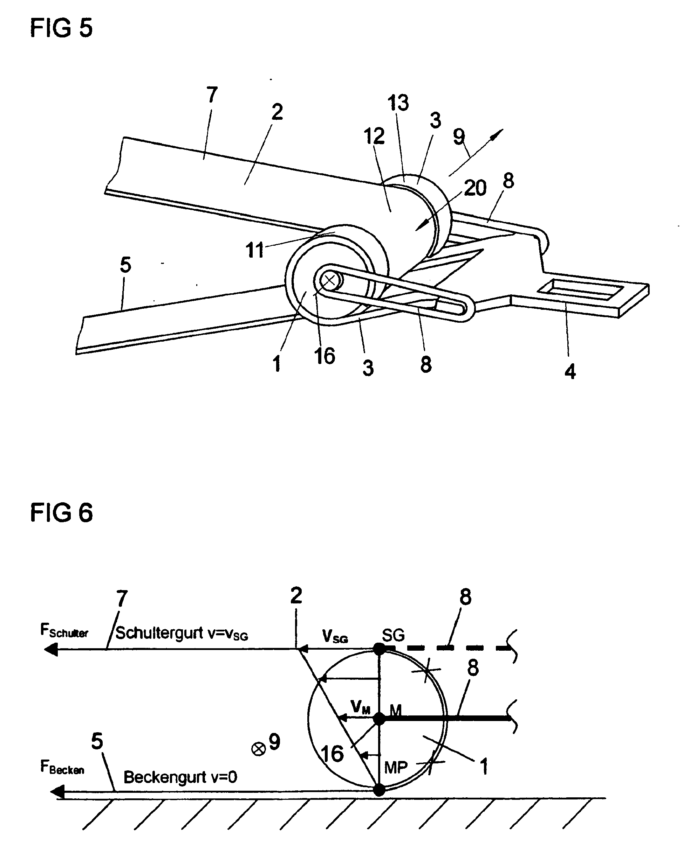

Figur 5 zeigt eine schematische, perspektivische Ansicht einer erfindungsgemäßen Schlossumlenkeinrichtung. Die Schlossumlenkeinrichtung weist eine Schlosszunge 4 zum Einstecken in eine (nicht dargestellte) Schlossschnalle auf, die für gewöhnlich an einer Fahrzeugtragstruktur oder an einem Fahrzeugsitz festgelegt ist. Die Schlosszunge 4 ist über zwei längs erstreckte Elemente 3 mit einem Umlenkkörper 1 verbunden, der zum Umlenken eines Sicherheitsgurtes 2 dient. Bei diesem Sicherheitsgurt 2 kann es sich z.B. um einen bekannten Dreipunktsicherheitsgurt handeln, der ausgehend von einem Gurtspeicher (z.B. Gurtrolle) zu einem etwa auf Höhe der Schulter einer bestimmungsgemäß angegurteten Person am Kraftfahrzeug gelagerten Schulterumlenkbeschlag verläuft, durch diesen umgelenkt wird und sodann diagonal über die Brust jener Person zum Umlenkkörper 1 geführt ist, von wo aus er sich entlang des Beckens des Fahrers zu einer Gurtverankerung erstreckt. Der Sicherheitsgurt 2 ist also um den Umlenkkörper 1 herumgelegt und dieser unterteilt den Sicherheitsgurt 2 in ein diagonal über den Oberkörper der besagten Person verlaufendes Schultersegment 7 und ein entlang des Beckens verlaufendes Beckensegment 5.

Der Umlenkkörper 1 erstreckt sich entlang einer Erstreckungsrichtung 9 längs und ist bei der in der Figur 5 gezeigten Ausführungsform als eine Umlenkrolle ausgebildet, deren Zylinderachse 16 parallel zu jener Erstreckungsrichtung 9 verläuft. Der Umlenkkörper 1 weist zwei freie Endabschnitte 11, 13 auf, die einander entlang der Erstreckungsrichtung 9 bzw. der Zylinderachse 16 gegenüberliegen und über einen mittleren Abschnitt 12 des Umlenkkörpers 1 insbesondere einstückig miteinander verbunden sind. D.h., die drei Abschnitte 11, 12, 13 sind vorzugsweise einstückig aneinander angeformt.

Die Schlosszunge 4 ist nun mittels der beiden längs erstreckten Elemente 3 über die beiden Endabschnitte 11, 13 mit dem Umlenkkörper 1 verbunden, indem diese ausgehend von der Schlosszunge 4 quer zur Erstreckungsrichtung 9 zu je einem zugeordneten Endabschnitt 11, 13 des Umlenkkörpers 1 geführt sind und um diesen herumgewickelt sind. Dabei sind die beiden längs erstreckten Elemente 3 jeweils gleichsinnig um den zugeordneten Endabschnitt 11, 13 gewickelt, wobei die längs erstreckten Elemente 3 den jeweiligen Endabschnitt 11, 13 vorzugsweise um 180° bis 360° umgreifen. Bevorzugt sind die längs erstreckten Elemente 3 über ihr jeweiliges Ende fest mit der Umlenkrolle 1 verbunden (z.B. durch eine Schweißverbindung oder eine formschlüssige Verbindung).

Die längs erstreckten Elemente 3 sind solchermaßen ausgebildet bzw. am Umlenkkörper 1 angeordnet, dass der Umlenkkörper 1 quer zur Erstreckungsrichtung 9 von der Schlosszunge 4 beabstandet angeordnet ist und zusammen mit den längs erstreckten Elementen 3 und der Schlosszunge 4 eine Durchgangsöffnung der Schlossumlenkeinrichtung begrenzt, durch die der um den Umlenkkörper 1 herum gelegte Sicherheitsgurt 2 geführt ist.

Dabei liegt der Sicherheitsgurt 2 an einem Anlagebereich 20 des Umlenkkörpers 1 an, der am mittleren Abschnitt 12 des Umlenkkörpers 1 ausgebildet ist. Der Anlagebereich 20 ist so beschaffen, dass der Sicherheitsgurt 2 am Anlagebereich 20 entlang gleiten kann. Greift allerdings am Schultersegment 7 eine Kraft an, die eine vorbestimmbare Schwellenkraft übersteigt, verändert der Anlagebereich 20 seine Eigenschaften dahingehend, dass nunmehr eine erhöhte Reibung zwischen dem Sicherheitsgurt 2 und dem Anlagebereich 20 herrscht, die bewirkt, dass das Entlanggleiten am Anlagebereich 20 verhindert wird und der Sicherheitsgurt 2 den Umlenkkörper 1 mitnimmt. Hierdurch werden die längs erstreckten Elemente 3 von den Endabschnitten 11, 13 des Umlenkkörpers 1 abgerollt, was eine Begrenzung der resultierenden am Schultersegment 7 angreifenden Kraft zur Folge hat. Der Anlagebereich 20 ist so beschaffen, dass die vorbestimmbare Schwellenkraft bei einer kollisionstypischen Verzögerung des Kraftfahrtzeuges überschritten wird, bei der eine mittels des Sicherheitsgurtes 2 bestimmungsgemäß angegurtete Person mit einer entsprechenden Geschwindigkeit in den Sicherheitsgurt 2 fällt.

Gegebenenfalls können zur Energieabsorption zusätzliche (optionale) Deformationselemente 8 vorgesehen sein. Bei der in der Figur 5 dargestellten Ausführungsform handelt es sich dabei um zwei elastisch deformierbare Elemente in Form einer geschlossenen Schlaufe, die jeweils einen entlang der Zylinderachse 16 vom Umlenkkörper 1 abstehenden Achsstummel mit der Schlosszunge 4 verbinden. Hierzu umgreift ein solches Deformationselement 8 mit einem Schlaufenabschnitt einen mit der Zylinderachse 16 fluchtenden Achstummel des Umlenkkörpers 1 und ist mit einem gegenüberliegenden Schlaufenabschnitt unter Vorspannung an einem an der Schlosszunge 4 ausgebildeten Haken eingehängt. Beim Abrollen der längs erstreckten Elemente 3 vom Umlenkkörper 1 werden die beiden Deformationselemente 8 unter Absorption von Energie gedehnt.

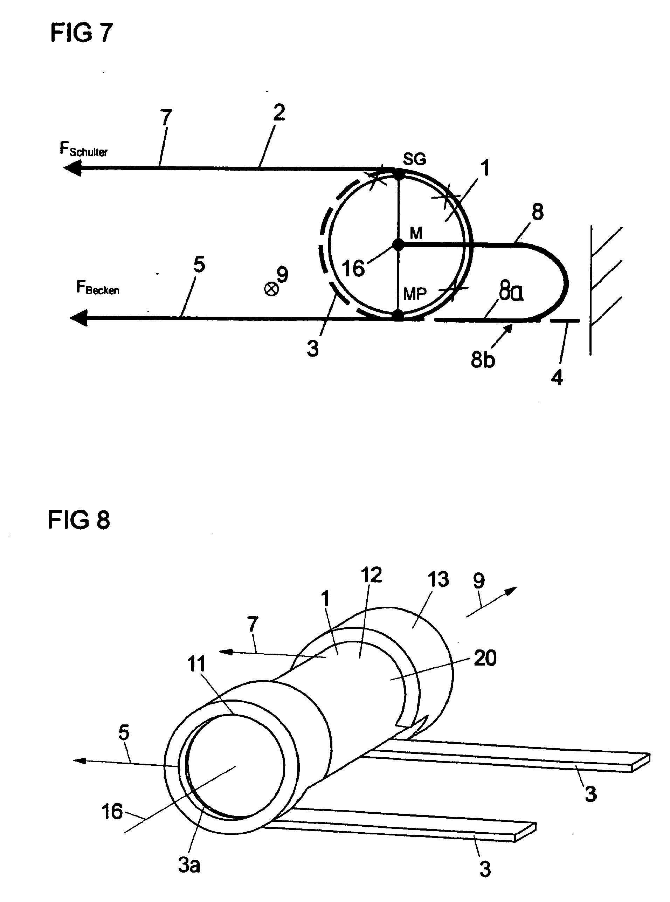

Figur 7 zeigt eine alternative Ausführungsform, bei der im Unterschied zur Figur 5 das Deformationselement 8 als eine inelastisch (plastisch) deformierbare Lasche ausgebildet ist, die wiederum einen Achsstummel des Umlenkkörpers 1 (oder einen entsprechenden Bereich des Umlenkkörpers) mit der Schlosszunge 4 verbindet, wobei die Lasche einen Winkel von zumindest 180° einschließt. Des Weiteren ist die Lasche 8 mit einem Endabschnitt 8a über eine Schwachstelle 8b mit der Schlosszunge 4 verbunden. Im Falle des Abrollens bzw. Abwickelns der längs erstreckten Elemente 3 vom Umlenkkörper 1 erfährt die Lasche 8 zunächst eine Biegeverformung, unter der die Lasche 8 zunächst gerade gezogen wird. Bei zunehmender Entfernung zwischen Umlenkkörper 1 und Schlosszunge 4 werden dann über die geradegezogene Lasche 8 Kräfte in die Schwachstelle 8b eingeleitet, die infolgedessen kontrolliert - ebenfalls unter Absorption von Energie - einreißt, ggf. bis zur vollständigen Durchtrennung der Schwachstelle 8b.

Bei dem Ausführungsbeispiel gemäß Figur 6 ist das Deformationselement 8 als ein ausziehbarer Stift ausgebildet, der den Umlenkkörper 1 (Umlenkrolle) im Bereich der Zylinderachse 16 mit der Schlosszunge 4 verbindet. Alternativ oder zusätzlich ist es möglich einen solchen Stift 8 an einem Bereich des Umlenkkörpers 1 vorzusehen, von dem aus das Schultersegment 7 von der Umlenkrolle abgeht. Bevorzugt wird die Erstreckungsrichtung des Stiftes 8 dabei an derjenigen Richtung ausgerichtet, entlang der das Schultersegment 7 vom Umlenkkörper 1 abgeht. Bei einem als Stift ausgebildeten Deformationselement 8 wird eine Energieabsorption vorzugsweise erreicht, indem der Stift 8 beim Abrollen der längs erstreckten Elemente 3 - hierbei entfernt sich der Umlenkkörper 1 von der Schlosszunge 4 - aus einer an der Schlosszunge 4 (oder ggf. dem Umlenkkörper 1) vorgesehenen Aussparung herausgezogen wird. Dabei kann der Stift 8 derart durch die Aussparung gehalten werden, dass dem Herausziehen des Stiftes 8 ein (vorbestimmbarer) Widerstand entgegengesetzt wird. Vorzugsweise wird dieser Widerstand dadurch bereitgestellt, dass der Stift 8 beim Herausziehen aus der zugeordneten Aussparung um eine oder mehrere Achsen umgebogen wird.

Sofern der Stift 8 mit der Zylinderachse 16 (ggf. über einen Achsstummel) der Umlenkrolle 1 verbunden werden soll, wird der Stift 8 vorzugsweise gelenkig gelagert, so dass er die Rotation der Umlenkrolle 1 nicht beeinträchtigt. Bei Anbringung des Stiftes 8 mit einem Hebelarm relativ zur Zylinderachse 16 kann der Stift 8 auf eine zusätzliche zylindrische Fläche aufgewickelt werden, so dass der Hebelarm konstant bleibt. Wenn die Wickelfläche keinen konstanten Abstand zur Zylinderachse 16 aufweist, ist eine spezielle Kennung der Kraftbegrenzung möglich, beispielsweise degressiv oder progressiv.

Figur 8 zeigt eine weitere Ausführungsform bei der im Unterschied zu den Figuren 5 und 7 keine zusätzlichen Deformationselemente 8 vorgesehen sind. Stattdessen sind bei der in der Figur 8 dargestellten Schlossumlenkeinrichtung die um die Endabschnitte 11, 13 des Umlenkkörpers 1 gewickelten Bereiche der längs erstreckten Elemente 3 selbst über zerstörbare Verbindungen 3a (Schwachstellen 3a) mit den Endabschnitten 11, 13 des Umlenkkörpers 1 verbunden, um dem Abwickeln der längs erstreckten Elemente 3 vom Umlenkkörper 1 durch ein Aufreißen entlang der Schwachstellen 3a einen zusätzlichen definierten (kontrollierbaren) Widerstand entgegenzusetzen. Für eine Sichtbarmachung der Schwachstellen 3a wurde der Endabschnitt 11 eingerückt bezüglich des vorderen längs erstreckten Elementes 3 dargestellt.

Damit der Sicherheitsgurt 2 ab einer bestimmten Schwellenkraft den Umlenkkörper 1 mitnehmen kann, so dass die längs erstreckten Elemente 3 vom Umlenkkörper 1 abgerollt werden, muss der Anlagebereich 20 des Umlenkkörpers 1 abhängig von der am Sicherheitsgurt 2 angreifenden Kraft zwei Zustände einnehmen können, wobei der eine Zustand des Anlagebereichs 20 dadurch gekennzeichnet ist, dass der Sicherheitsgurt 2 bei an diesem angreifenden Kräften, die unterhalb der vorbestimmbaren Schwellenkraft liegen, am Anlagebereich 20 entlang gleiten kann, ohne dass die längs erstreckten Elemente 3 abgerollt werden. Der andere Zustand ist dahingegen dadurch gekennzeichnet, dass zwischen dem Sicherheitsgurt 2 und dem Anlagebereich 20 ein Reib- oder Formschluss erzeugt wird, der eine Relativbewegung zwischen Sicherheitsgurt 2 und Anlagebereich 20 verhindert, wenn die am Schultersegment 7 angreifenden Kräfte jene Schwellenkraft übersteigen.

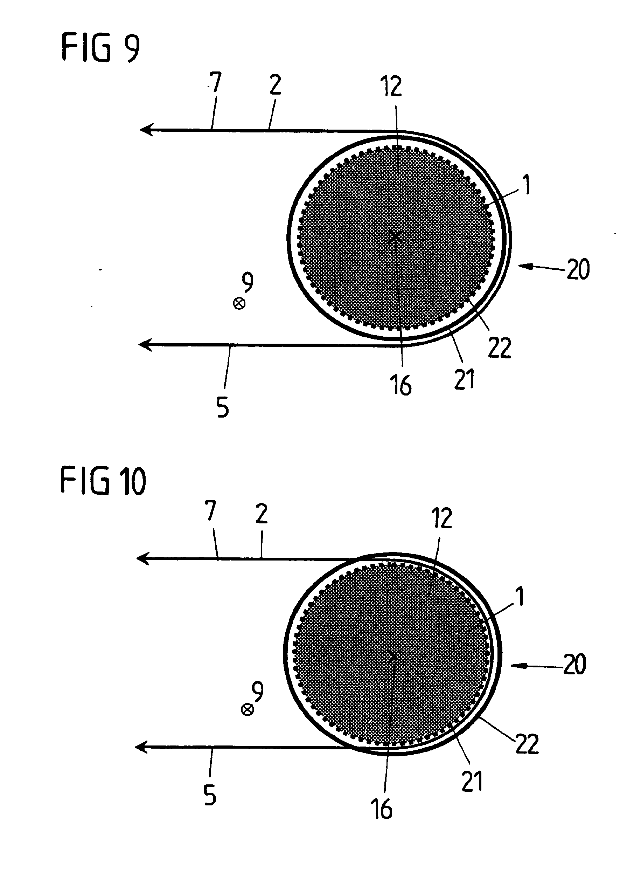

Der Anlagebereich 20 weist daher gemäß den Figuren 9 und 10 eine erste Anlagefläche 21 auf, an der der Sicherheitsgurt 2 anliegt, wenn die am Schultersegment 7 angreifenden Kräfte unterhalb der Schwellenkraft liegen, sowie eine zweite Anlagefläche 22, an der der Sicherheitsgurt 2 anliegt, wenn die besagten Kräfte die Schwellenkraft übersteigen. Dabei ist die Reibung zwischen der ersten Anlagefläche 21 und dem Sicherheitsgurt 2 dergestalt, dass der Sicherheitsgurt 2 an der ersten Anlagefläche 21 entlang gleiten kann, wohingegen die Reibung zwischen der zweiten Anlagefläche 22 und dem Sicherheitsgurt 2 so beschaffen ist, dass der an der zweiten Anlagefläche 22 anliegende Sicherheitsgurt 2 eine Kraft in den Umlenkkörper 1 einleiten kann, aufgrund der der Umlenkkörper 1 durch den Sicherheitsgurt 2 mitgenommen wird und die längs erstreckten Elemente 3 vom Umlenkkörper 1 abgerollt werden.

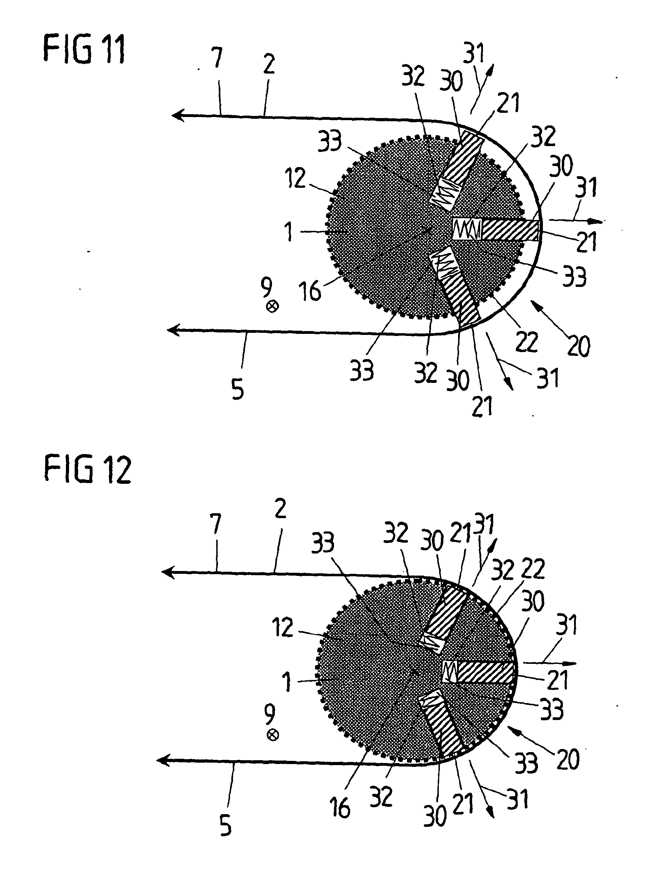

Gemäß dem in den Figuren 11 und 12 gezeigten Ausführungsbeispiel des Umlenkkörpers 1 sind an dem Umlenkkörper 1 bewegbare Elemente 30 gelagert, die zwischen einer ersten und einer zweiten Position hin und her bewegt werden können. Die bewegbaren Elemente 30 sind dabei jeweils in einer schlitz- oder ggf. sacklochförmigen Ausnehmung 33 des Umlenkkörpers 1 formschlüssig geführt, die jeweils entlang einer Normalen 31 zur Oberfläche 22 des Umlenkkörpers 1 erstreckt sind. In ihrer ersten Position stehen die bewegbaren Elemente 30 mit einer dem Sicherheitsgurt 2 zugewandten Stirnseite 21 aus der jeweils zugeordneten Ausnehmung 33 heraus. In diesem Fall liegt der um den Umlenkkörper 1 herum gelegte Sicherheitsgurt 2 lediglich an jenen Stirnseiten 21 an, die in ihrer Gesamtheit die erste Anlagefläche 21 bilden.

Die beweglichen Elemente 30 stützen sich jeweils über ein Federelement 32 an einem Boden der den bewegbaren Elementen 30 jeweils zugeordneten Ausnehmungen 33 ab. Entgegen der durch die Federelemente 32 bereitgestellten Gegenkraft kann jedes bewegbare Element 30 aus seiner ausgerückten ersten Position in seine zweite Position gemäß Figur 12 bewegt werden, in der der Sicherheitsgurt 2 flächig an der äußeren, nach außen gewandten Oberfläche 22 des mittleren Abschnittes 12 des Umlenkkörpers 1 zu liegen kommt. Die zweite Anlagefläche 22 wird also durch die die Ausnehmungen 33 der bewegbaren Elemente 30 berandende Oberfläche 22 des mittleren Abschnittes 12 des Umlenkkörpers 1 gebildet. Die Bewegung der bewegbaren Elemente 30 aus der ersten Position in jene zweite Position wird durch den Sicherheitsgurt 2 bewirkt, der die bewegbaren Elemente 30 in die Ausnehmungen 33 drückt, sofern die am Schultersegment 7 angreifende Kraft die besagte Schwellenkraft übersteigt.

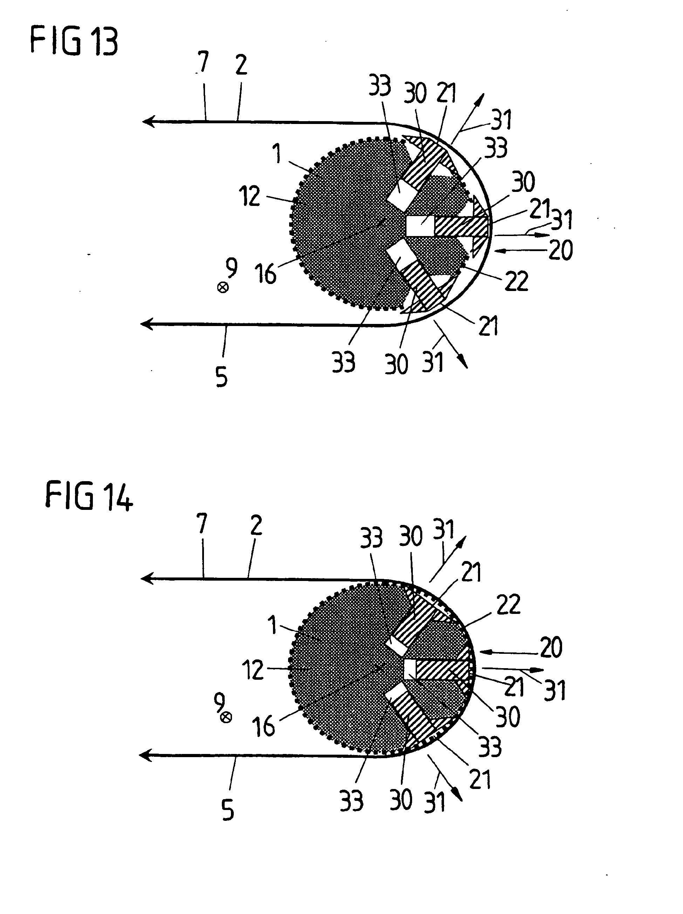

Die Figuren 13 und 14 zeigen eine Abwandlung des in den Figuren 11 und 12 gezeigten Umlenkkörpers 1, bei dem im Unterschied zu den Figuren 11 und 12 die bewegbaren Elemente 30 nicht durch Federelemente 32 in ihrer ersten Position gehalten werden, sondern durch ihre eigene Elastizität. Dabei weisen die bewegbaren Elemente 30 je einen verbreiterten Kopf auf, mit einer dem Sicherheitsgurt 2 zugewandten Oberfläche 22, wobei diese Oberflächen 22 in ihrer Gesamtheit die erste Anlagefläche 22 bilden. In der ersten Position liegen diese Köpfe mit einem äußersten umlaufenden Randbereich auf einem die jeweilige zugeordnete Ausnehmung 33 berandenden Randbereich auf, so dass die ersten Anlageflächen 21 (Oberflächen der Köpfe) entlang einer Normalen 31 der zweiten Anlagefläche 22 (Oberfläche des Umlenkkörpers) über jene zweite Anlagefläche 22 hinausstehen. Der Sicherheitsgurt 2 kann daher in dieser ersten Position der bewegbaren (elastischen) Elemente 30 nur an jenen Köpfen der bewegbaren Elemente 30 (erste Anlagefläche) anliegen. Übersteigt die am Schultersegment 7 angreifende Kraft die vorbestimmbare Schwellenkraft drückt der Sicherheitsgurt 2 die bewegbaren Elemente 30 unter elastischer Verformung der Köpfe der bewegbaren Elemente 30 in ihre zugeordneten Ausnehmungen 33, so dass der Sicherheitsgurt 2 flächig an der zweiten Anlagefläche 22 zu liegen kommt. Die verformten Köpfe werden dabei vorzugsweise durch entsprechend geformte (konische) Aufweitungen der Ausnehmungen 33 formschlüssig aufgenommen.

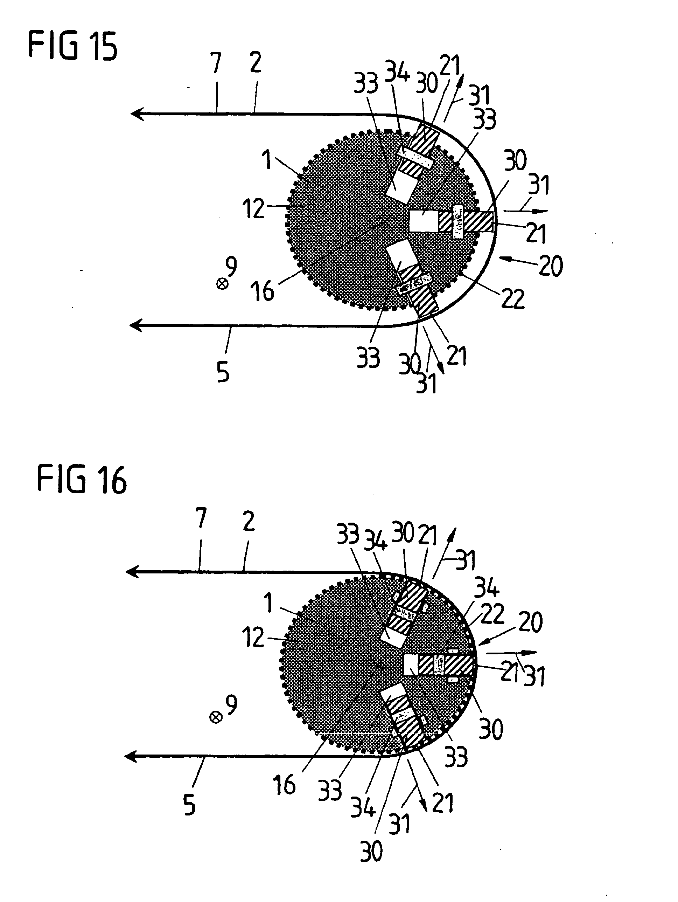

Die Figuren 15 und 16 zeigen eine Abwandlung des in den Figuren 11 und 12 gezeigten Umlenkkörpers 1, bei dem im Unterschied zu den Figuren 11 und 12 die bewegbaren Elemente 30 nicht durch Federelemente 32 in ihren ersten ausgerückten Positionen gehalten werden, sondern durch ein abscherbares Verbindungsmittel 34, das von den bewegbaren Elementen 30 jeweils quer zu deren Bewegungsrichtung 31, die normal zur zweiten Anlagefläche 22 orientiert ist, absteht und in eine Aussparung eingreift, die an einer Wandung der betreffenden Ausnehmungen 33 ausgebildet ist. Übersteigt die am Schultersegment 7 angreifende Kraft die Schwellenkraft drückt der Sicherheitsgurt 2 derart gegen die bewegbaren Elemente 30, dass die Verbindungsmittel 34 von den bewegbaren Elementen 30 abgeschert und die bewegbaren Elemente 30 jeweils in ihre zweiten Position eingerückt werden, so dass der Sicherheitsgurt 2 zur Anlage an die zweiten Anlagefläche 22 gelangt.

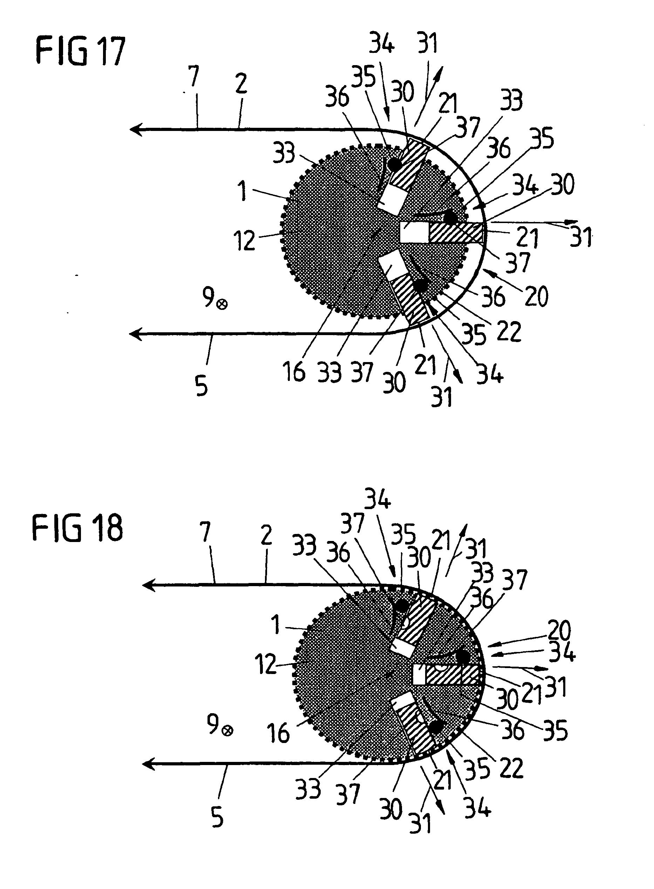

Die Figuren 17 und 18 zeigen eine Abwandlung des in den Figuren 15 und 16 dargestellten Umlenkkörpers 1, bei dem die bewegbaren Elemente 30 jeweils durch ein reversibles, zerstörungsfrei arbeitendes Verbindungsmittels 34 in der ersten Position gehalten werden. Hierzu ist an den bewegbaren Elementen 30 jeweils eine Aussparung 37 vorgesehen, in die eine mittels einer Blattfeder 36 beaufschlagte Kugel 35 quer zur Bewegungsrichtung 31 des jeweiligen bewegbaren Elementes 30 gedrückt wird, so dass der gegen die bewegbaren Elemente 30 drückende Sicherheitsgurt 2 die bewegbaren Elemente 30 erst in deren zweite, eingerückte Position bewegen kann, wenn die am Schultersegment 7 angreifende Kraft die Schwellenkraft übersteigt. Ist dies der Fall, werden die Kugeln 35 entgegen der Kraft der Blattfedern 36 aus den Aussparungen 37 herausgedrückt und die bewegbaren Elemente 30 gelangen in ihre eingerückten zweiten Positionen gemäß Figur 18.

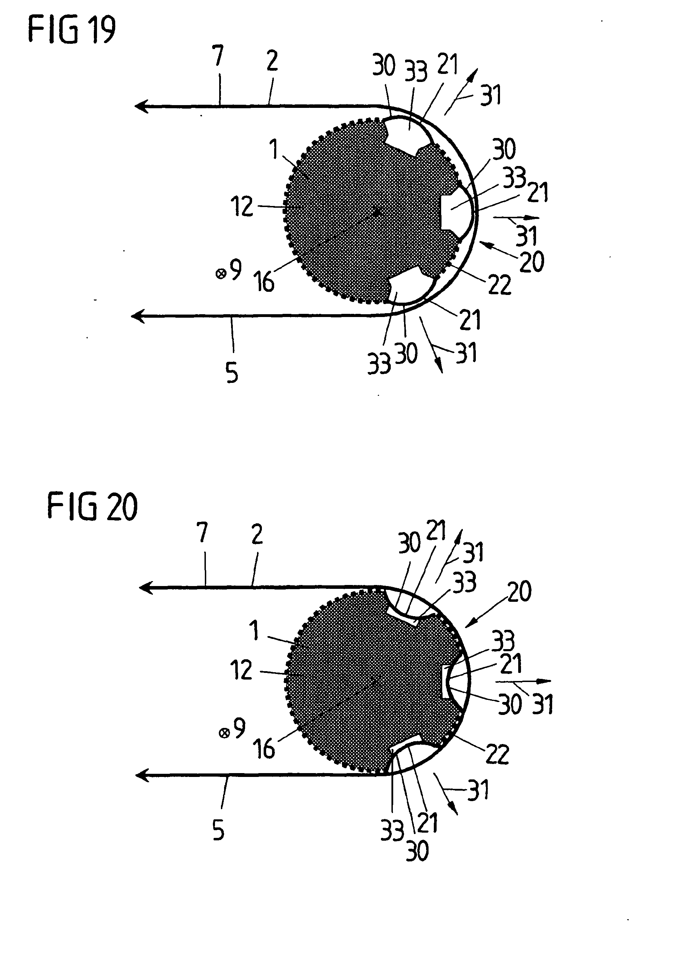

Die Figuren 19 und 20 zeigen eine weitere Ausführungsform eines erfindungsgemäßen Umlenkkörpers 1, bei dem die bewegbaren Elemente 30 als Blattfedern ausgebildet sind. Dabei ist jede Blattfeder 30 über einer ihr zugeordneten Ausnehmung 33 angeordnet, wobei sie sich an einem die betreffende Ausnehmung 33 umlaufenden Randbereich abstützt. In ihrer ersten Position ist die Blattfeder dabei in Richtung auf den den Umlenkkörper 1 umlaufenden Sicherheitsgurt 2 gewölbt, so dass der Sicherheitsgurt 2 lediglich an den Blattfedern 30 anliegt. D.h., die erste Anlagefläche 21 wird durch die dem Sicherheitsgurt 2 zugewandten Oberflächen 21 der Blattfedern 30 gebildet. Übersteigt die am Schultersegment 7 angreifende Kraft die Schwellenkraft, drückt der Sicherheitsgurt 2 so gegen die Blattfedern 30, dass sich deren Wölbung umkehrt und in die jeweilige Ausnehmung 33 hinein steht, so dass der Sicherheitsgurt 2 an der zweiten Anlagefläche 22 zu liegen kommt, die wie gehabt durch die die Ausnehmungen 33 berandende Oberfläche 22 des Umlenkkörpers 1 gebildet wird.

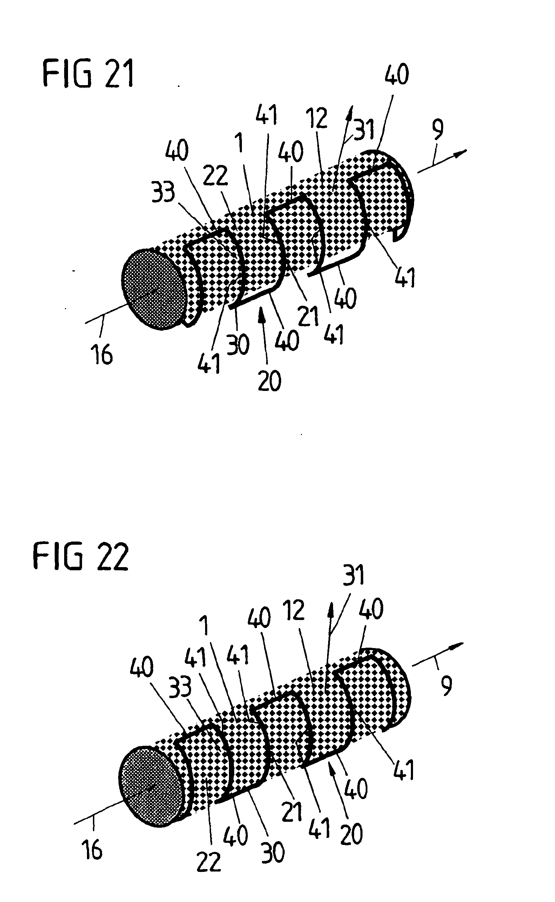

Die Figuren 21 bis 22 zeigen eine Ausführungsform des Umlenkkörpers 1, bei der das bewegbare Element 30 durch eine Drahtklammer gebildet wird, die sich entlang der Oberfläche 22 (zweite Anlagefläche 22) des Umlenkkörpers 1 erstreckt. Die Drahtklammer 30 ist über zwei freie Endabschnitte am Umlenkkörper 1 festgelegt und weist eine dem Sicherheitsgurt 2 zugewandte Oberfläche auf, die die erste Anlagefläche 21 bildet. Die Drahtklammer 30 kann durch den anliegenden Sicherheitsgurt 2 aus ihrer ersten Position, in der der Sicherheitsgurt 2 die darunterliegende zweite Anlagefläche 22 nicht berühren kann, in ihre zweite Position bewegt werden, in der die Drahtklammer 30 in einer entsprechend geformten Ausnehmung 33 des Umlenkkörpers 1 angeordnet ist derart, dass der Sicherheitsgurt 2 an der zweiten Anlagefläche 22 anliegen kann. Das Bewegen der Drahtklammer 30 aus der ersten in die zweite Position erfolgt durch den Sicherheitsgurt 2 in der bereits beschriebenen Weise. Damit der Sicherheitsgurt 2 in der ersten Position der Drahtklammer 30 effektiv auf Abstand zur zweiten Anlagefläche 22 des Umlenkkörpers 1 gehalten werden kann, weist die Drahtklammer 30 quer zur Erstreckungsrichtung 9 verlaufende Abschnitte 41 auf, die durch entlang der Erstreckungsrichtung 9 verlaufende Abschnitte 40 miteinander verbunden sind, so dass sich ein rechteckförmiger Verlauf der Drahtklammer 30 ergibt.

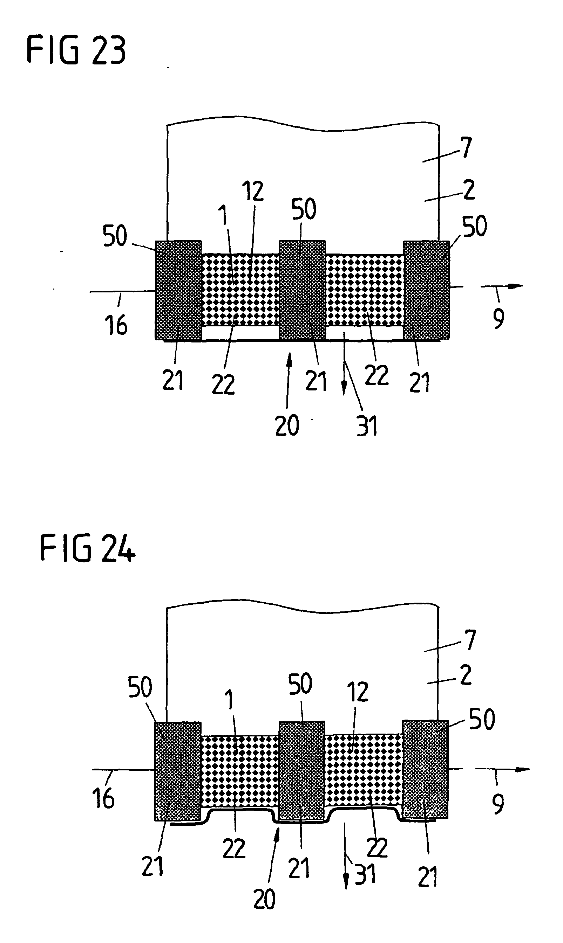

Bei dem Umlenkkörper 1 gemäß den Figuren 23 und 24 wird die erste Anlagefläche 21 durch die dem Sicherheitsgurt 2 zugewandten Oberflächen von Stegen 50 gebildet, die den Umlenkkörper 1 quer zur Erstreckungsrichtung 9 ringförmig umlaufen. Zwischen zwei solchermaßen umlaufenden Stegen 50 erstrecken sich die zweiten Anlageflächen 22, mit ihren höheren Reibungskoeffizienten. Solange die an dem Schultersegment 7 angreifende Kraft die Schwellenkraft nicht übersteigt, liegt der um den Umlenkkörper 1 herum gelegte Sicherheitsgurt 2 lediglich an den besagten Oberflächen 21 der Stege 50 an (erste Anlagefläche 21). Übersteigt jedoch jene Kraft die Schwellenkraft, deformiert sich der Sicherheitsgurt 2 durch die auf ihn wirkenden Kräfte derart, dass er auch zur Anlage an die zweiten Anlageflächen 22 gelangt, die zwischen den Stegen 50 umlaufen (vgl. Figur 24).

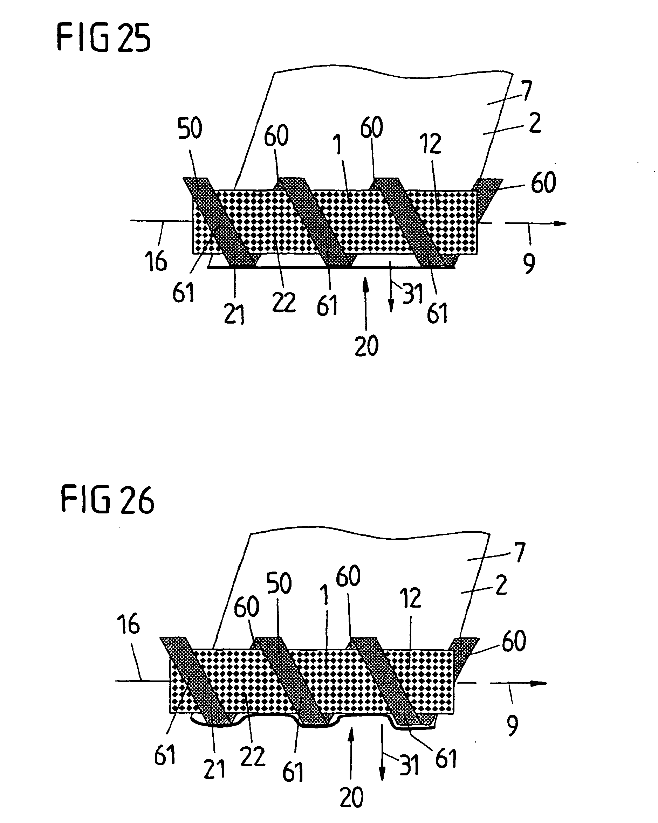

Die Figuren 25 und 26 zeigen eine Abwandlung des in den Figuren 23 und 24 gezeigten Umlenkkörpers 1 bei der der Steg 50 im Unterschied zu den Figuren 23 und 24 spiralförmig am Umlenkkörper 1 umläuft. In gleicher Weise umläuft deshalb auch die tieferliegende zweite Anlagefläche 22 spiralförmig am Umlenkkörper 1. Dies bewirkt, dass es Abschnitte 60 der ersten Anlagefläche 21 gibt, die entlang der Gurtverlaufsrichtung des abgehenden Schultersegmentes 7 orientiert sind und gegenüberliegende zweite Abschnitte 61, die entlang der Gurtverlaufsrichtung des vom Umlenkkörper 1 abgehenden Beckensegmentes 5 orientiert sind. Auf diese Weise wird die Anlage des jeweiligen Segmentes 7, 5 an der zweiten Anlagefläche 22 optimiert.

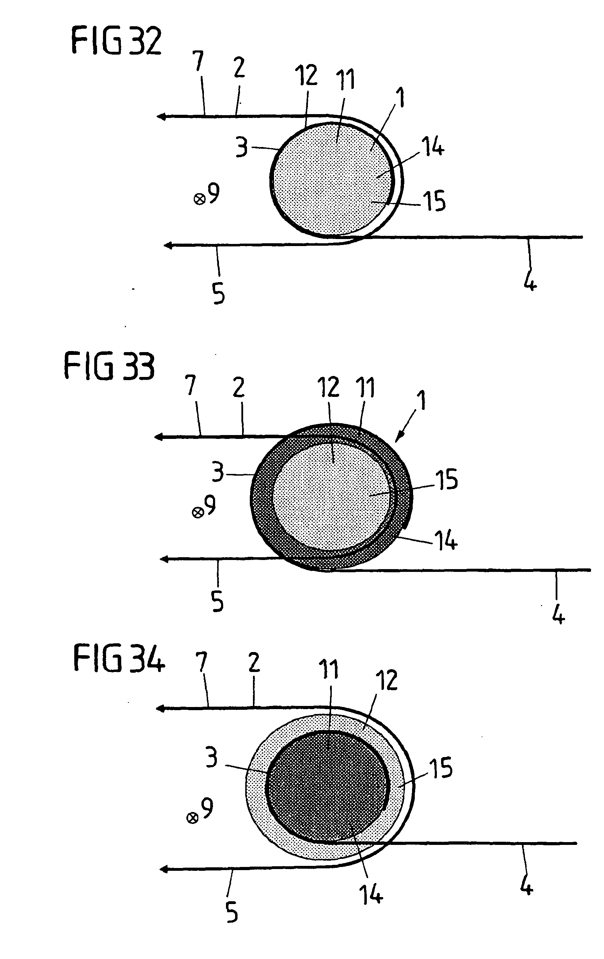

Um die durch den Sicherheitsgurt 2 auf den Umlenkkörper 1 bzw. die längs erstreckten Elemente 3 ausübbare Kraft zu beeinflussen, kann der mittlerer Abschnitt 12 des Umlenkkörpers 1, um den der Sicherheitsgurt 2 herum gelegt ist, gemäß Figur 34 im Querschnitt einen größeren Durchmesser bzw. Radius erhalten als die beiden Randabschnitte 11, 13 des Umlenkkörpers 1. Natürlich ist es auch möglich die Durchmesser der Endabschnitte 11, 13 und des mittleren Abschnittes 12 gleich groß zu halten (Figur 32), oder aber den Durchmesser des mittleren Abschnittes 12 gegenüber dem Durchmesser der Endabschnitte 11, 13 abzusenken (Figur 33). Im Fall der in der Figur 34 dargestellten Situation bedeutet dies, dass eine am Schultersegment 7 angreifende (das Schultersegment 7 spannende) Kraft eine Rotation der Umlenkrolle 1 bewirkt, sofern die besagte Schwellenkraft überschritten wird, wohingegen eine am Beckensegment 5 angreifende und das Beckensegment 5 spannende Kraft einer solchen Rotation entgegen wirkt bzw. in die Auslegung der Kraftverhältnisse zur Begrenzung der am Schultersegment angreifenden Kräfte miteinbezogen werden kann. Damit ist es möglich, auf die Verwendung zusätzlicher Energieaufnahmeeinrichtungen zu verzichten, da die Begrenzung der am Schultersegment angreifenden Kraft allein über das Abwickeln der längs erstreckten Elemente 3 und die am Beckensegment 5 angreifenden Kraft realisiert werden kann. Da die resultierende Schultergurtkraft von der Beckengurtkraft abhängt und diese von der Insassengröße, ist bei einer derartigen Anordnung eine Anpassung der Rückhaltung am Schultersegment 7 für den jeweiligen Insassen möglich bzw. ergibt sich selbstadaptiv. Ein weiterer Vorteil liegt darin, dass bedingt durch den Hebelarm des Beckensegmentes 5 bezüglich des Abrollpunktes MP die Rotation der Umlenkrolle 1 in eine zusätzliche Straffung des Beckensegmentes 5 umgesetzt wird.

Im Fall der Figur 32 kann lediglich die am Schultersegment 7 angreifende Kraft eine Rotation der Umlenkrolle 1 (unter Abwickeln der längs erstreckten Elemente 3) bewirken, wohingegen bei der in der Figur 33 dargestellten Situation sowohl die am Schultersegment 7 angreifende Kraft als auch die am Beckensegment 5 angreifende Kraft eine Rotation der Umlenkrolle 1 bewirken kann.

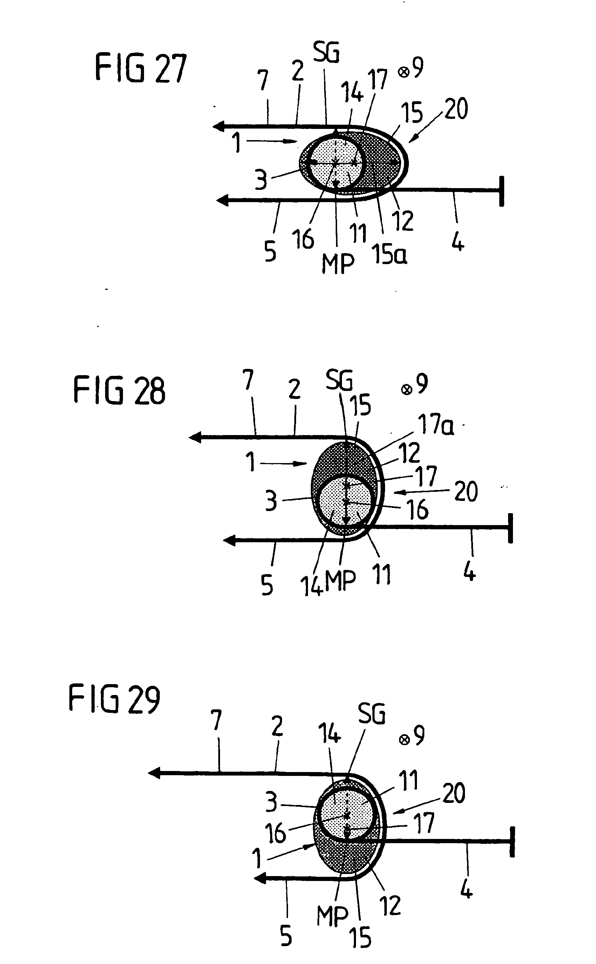

Des Weiteren besteht die Möglichkeit gemäß den Figuren 27 bis 29 die auf die längs erstreckten Elemente 3 ausgeübten Kräfte weg- bzw. zeitabhängig zu variieren, indem der mittlere Abschnitt 12 eine Ausformung erhält, die von der Kreiszylindersymmetrie bezüglich der Zylinder- oder Rotationsachse 16 abweicht. Erhält der mittlere Abschnitt 12 beispielweise einen länglichen Querschnitt (z.B. ellipsenförmig), weist der mittlere Abschnitt 12 je nach Winkellage einen unterschiedlich langen Hebelarm auf, dessen Länge durch den Abstand zwischen demjenigen Punkt SG, von dem (im Querschnitt betrachtet) das Schultersegment 7 vom mittleren Abschnitt 12 des Umlenkkörpers 1 abgeht und demjenigen Punkt MP, über den die Endabschnitte 11, 13 (im Querschnitt betrachtet) abrollen, bestimmt wird

Dies kann auch dadurch bewirkt werden, dass der mittlere Abschnitt 12 exzentrisch zur Zylinderachse 16 angeordnet wird.

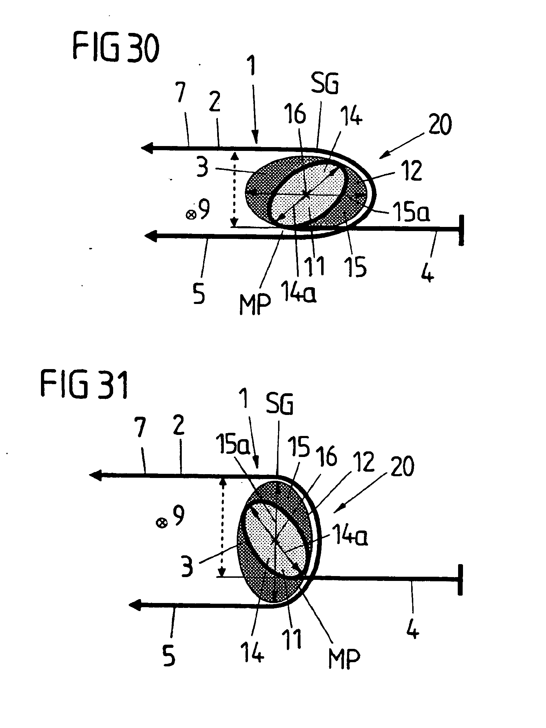

Des Weiteren ist in der Ausführungsform gemäß den Figuren 30 und 31 vorgesehen, dass sowohl der mittlere Abschnitt 12 als auch die beiden Endabschnitte 11, 13 jeweils eine längs erstreckte Querschnittsfläche 14, 15 aufweisen, die sich jeweils entlang einer Längsachse 14a, 15a längs erstrecken, wobei die Längsachsen 14a der Querschnitte 14 der Endabschnitte 11, 13 jeweils einen (nicht verschwindenden) Winkel mit der Längsachse 15a des Querschnittes 15 des mittleren Abschnittes 12 bilden. Auch auf diese Weise wird der vorstehend beschriebene Abstand SG-MP und damit der Kraftverlauf beim Abwickeln der längs erstreckten Elemente 3 weg- bzw. zeitabhängig variiert.

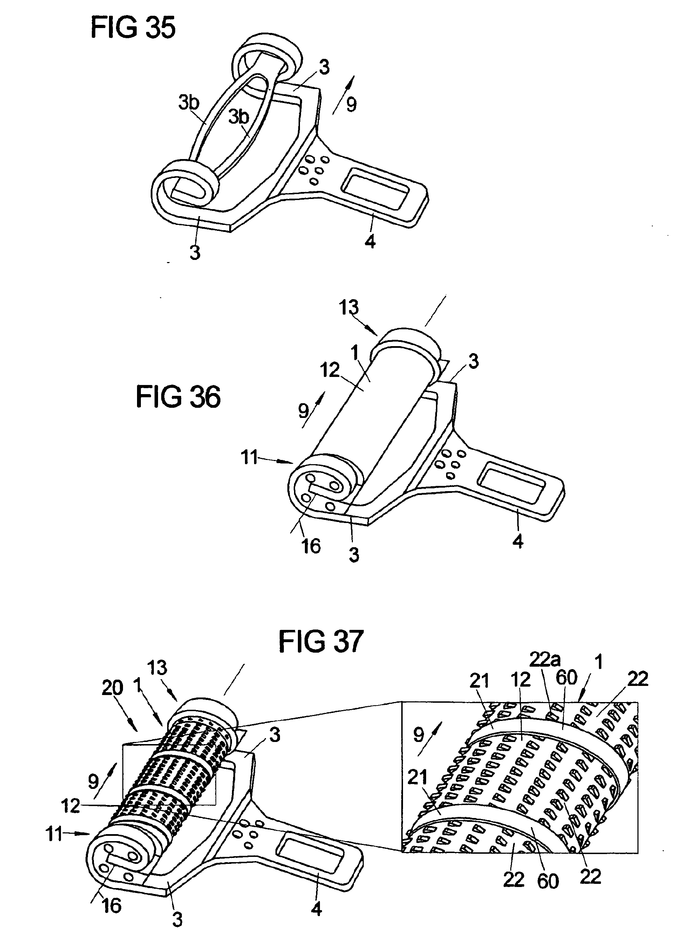

Die Figuren 35 bis 37 zeigen eine weitere Ausführungsform einer erfindungsgemäßen Schlossumlenkeinrichtung, bei der die Schlosszunge 4 einstückig an die beiden längs erstreckten Elemente 3 angeformt ist. Die Schlosszunge 4 wird zusammen mit den längs erstreckten Elementen 3 als einheitliches Teil aus einem Metallstück ausgestanzt und anschließend entsprechend gerollt und gebogen. Die beiden längs erstreckten Elemente 3 sind durch Verstärkungsstreben 3b miteinander verbunden, die entlang der Erstreckungsrichtung 9 erstreckt sind. Die Verstärkungsstreben 3b verhindern ein Aufspreizen der längs erstreckten Elemente 3 beim Einleiten der Gurtkräfte in die Schlossumlenkeinrichtung. Das Vorsehen von zwei Verstärkungsstreben 3b dient der besseren Übertragung des Drehmomentes, welches über die am Schultersegment 7 angreifende Kraft in den Umlenkkörper 1 eingeleitet wird. Um den Umlenkkörper 1 herzustellen, wird das verformte Stanzteil (Schlosszunge 4 und daran ausgebildete längs erstreckte Elemente 3) in eine Spritzgussmaschine eingelegt und um die Verstärkungsstreben 3b herum mit Kunststoff umspritzt. Der Anlagebereich 20 gemäß Figuren 25, 26 und 37 kann ebenfalls beim Umspritzen ausgebildet werden und ist dann einstückig an die Umlenkrolle 1 angeformt. Es ist auch möglich, den Anlagebereich 20 aus anderen Materialen, insbesondere Metall, auszubilden und nachträglich auf die Umlenkrolle 1 aufzubringen. Der erhöhte Reibungskoeffizient der zweiten Anlagefläche 22 wird bei dem in den Figuren 35 bis 37 dargestellten Ausführungsbeispiel vorzugsweise durch eine Strukturierung der zweiten Anlagefläche 22 erzeugt (vgl. Figur 37). Hierzu sind an der zweiten Anlagefläche Erhebungen 22a ausgebildet, die in einem senkrecht zur Erstreckungsrichtung 9 verlaufenden Querschnitt zwei spitzwinklig aufeinander zulaufende Seiten aufweisen, die in Bezug auf eine Normale der zweiten Anlagefläche jedoch eine unterschiedliche Steigung aufweisen können, d.h., die die Erhebungen 22a sind richtungsabhängig ausgebildet, und zwar derart, dass bei einer Relativbewegung zwischen Umlenkkörper 1 und Sicherheitsgurt 2 infolge einer über das Beckensegment 5 eingeleiteten Kraft ein größerer Widerstand entgegengesetzt wird als bei einer über das Schultersegment 7 eingeleiteten Kraft. Vorzugsweise sind die Spitzen der Erhebungen abgeflacht, um den Sicherheitsgurt 2 nicht zu sehr zu beanspruchen.

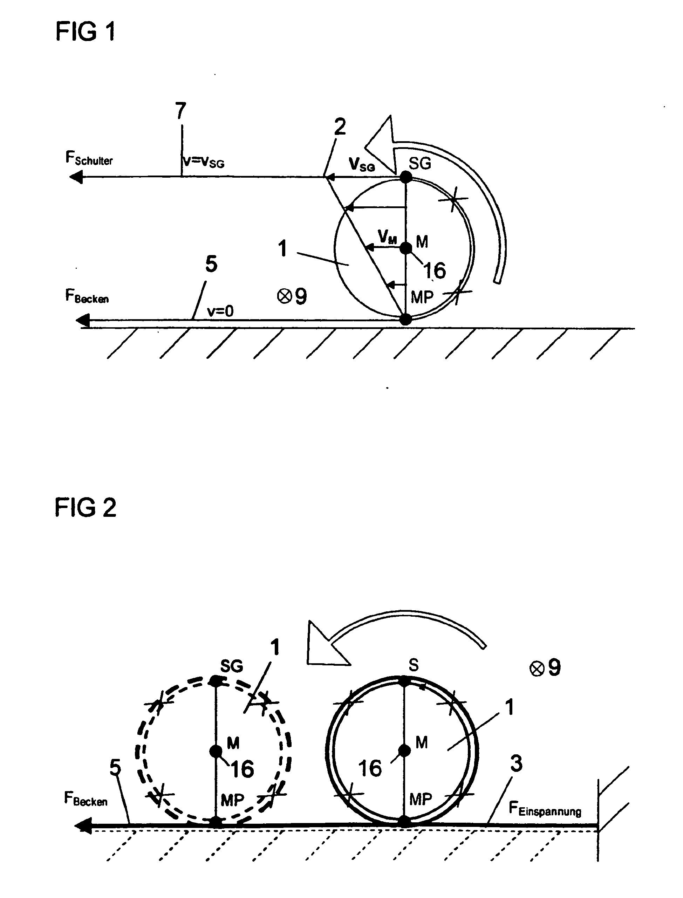

Nachfolgend soll anhand der Figuren 1 bis 6 noch einmal das der Erfindung zugrunde liegende Prinzip verdeutlicht werden.

Das zentrale Element dieses Prinzips ist der Umlenkkörper 1, der vorzugsweise die Form einer Umlenkrolle aufweist, die zwei schaltbare Zustände annehmen kann. Im normalen Gebrauch läuft der Sicherheitsgurt 2 frei um die Umlenkrolle 1 herum, was einen niedrigen Reibwert voraussetzt. Bei einem Unfall wird jedoch diese freie Umlaufbewegung unterbunden, entweder durch Reibschluss mit einem hohen Reibwert oder durch einen Formschluss. Auf diese Weise bilden die Umlenkrolle 1 und der Sicherheitsgurt 2 eine Einheit im Bereich der Berührung und unterbinden hiermit jegliche Relativbewegung zueinander. Wie die daraus resultierende Kinematik im Einzelnen funktioniert, wird nachfolgend erläutert.

Die Umlenkrolle 1 ist gemäß Figur 1 in der Lage, auf der gedachten Ebene des Beckensegmentes 5 abzurollen. Bei dieser Bewegung befindet sich der Momentanpol MP auf jener Ebene, so dass die momentane Geschwindigkeit dieses Punktes verschwindet. Aufgrund der Tatsache, dass keine relative Bewegung zwischen dem Beckensegment 5 und der Umlenkrolle 1 im Bereich der Kontaktstelle stattfinden kann, ist die momentane Geschwindigkeit des Beckensegmentes 5 ebenfalls gleich Null (der Punkt "MP" liegt auf dem Beckensegment 5). Die Geschwindigkeit in Richtung der Bewegung nimmt mit dem Abstand von der Abrollebene linear zu und erreicht ihr Maximum $v_{SG}$ im höchsten Punkt SG, der gleichzeitig der Umlenkrolle 1 und dem Schultergurt angehört. Dieser Punkt SG bewegt sich dabei mit der doppelten Geschwindigkeit $2*v_M$ des Mittelpunktes M der Umlenkrolle 1. Deshalb ist nach einer definierten Verschiebung des Mittelpunktes M um s[mm], der Punkt SG um einen Verschiebeweg von 2*s[mm] gewandert. Im Gegenteil dazu wurde der Punkt MP kumuliert nicht verschoben. Durch diese einfache kinematische Beziehung lässt sich eine Vorrichtung konstruieren, die das Beckensegment 5 trotz beweglicher Elemente nicht nachlässt (entspannt) und das Schultersegment 7 definiert entlastet. Wichtig ist hierbei die Unterbindung der Relativbewegung im Kontaktbereich.

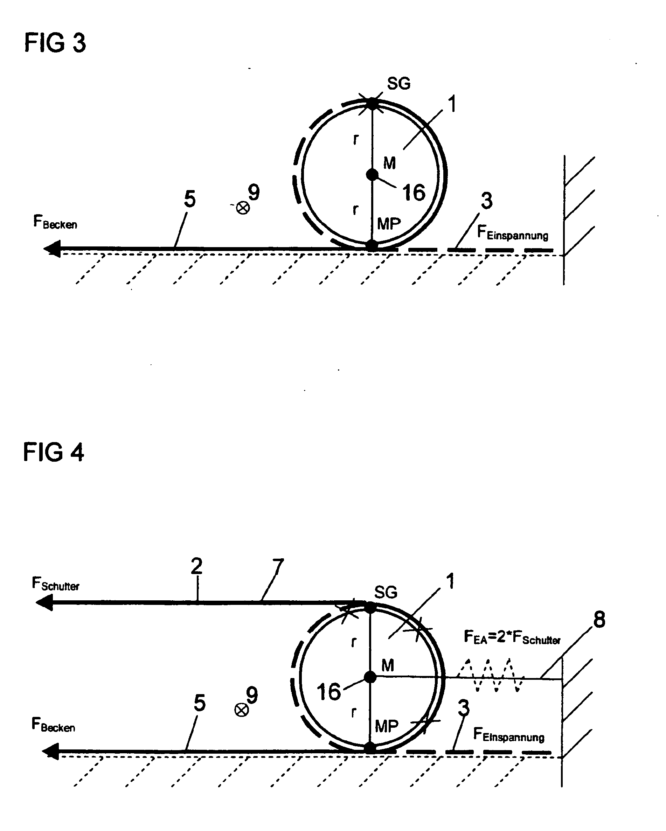

Allerdings wird vorliegend keine Abrollebene realisiert, sondern die technischen Prinzipien der Seiltheorie, insbesondere der einfachen Umschlingung einer Rolle durch ein Seil 2 ausgenutzt, wie anhand der Figuren 2 und 3 dargestellt werden soll.

Gemäß den Figuren 2 und 3 umschlingt das Seil 2 (bzw. der Sicherheitsgurt 2) vollständig die Umlenkrolle 1 und wird an einem Ende eingespannt. An dem anderen Ende wirkt weiter eine Kraft $F_{Becken}$. Unabhängig von der Größe dieser Kraft wird keine Bewegung der Umlenkrolle 1 induziert. Diese Kraft wirkt sich nur auf die Pressung zwischen der Umlenkrolle 1 und dem Seil 2 entlang der Umschlingung aus und wird vollständig durch die Einspannung abgeleitet. Damit folgt das Kräfteverhältnis:

$$F_{Becken} = F_{Einspannung}$$

Somit befindet sich das System in einem quasi-stabilen Zustand. Der Grund hierfür liegt in der Tatsache, dass die Umlenkrolle 1 jede beliebige Position entlang der Abrollebene annehmen kann, ohne den Kraftfluss zu verändern. Das System ist in sich verspannt und trotzdem beweglich. Wird das umschlingende Seil 2 entlang der Umschlingung getrennt und die neuen Seilenden mit der Umlenkrolle 1 fest verbunden, weist das System die gleichen Eigenschaften wie bei einem vollständigen Seil 2 auf.

Ausgehend von diesen Überlegungen ist es möglich, das System noch zu erweitern und zu modifizieren. Hierzu wird gemäß Figur 4 eine weitere Kraft $F_{Schulter}$ am oberen Punkt SG eingeführt, wie auch eine Ableitung dieser Kraft über den Punkt M durch ein Energieaufnahmeelement (Deformationselement 8). Die volle Umschlingung wird unterbrochen und durch einen Kraft- oder Formschluss des Seils 2 mit der Umlenkrolle 1 simuliert. Dadurch ist die unterbundene Relativbewegung zwischen Umlenkrolle 1 und Sicherheitsgurt 2 (Seil 2) wieder gewährleistet. Das System sieht dann folgendermaßen aus:

Bei allen möglichen Kräfteverteilungen ergibt sich ein Gleichgewicht. Die Summe der horizontalen Kräfte ist dabei gleich Null:

$$F_{Schulter} + F_{Becken} - F_{EA} - F_{Einspannung} = 0$$

Das Momentengleichgewicht um Punkt MP ergibt:

$$F_{Schulter}*2*r = F_{EA}*r$$

$$F_{Schulter}*2 = F_{EA}$$

Somit ergibt sich:

$$F_{Einspannung} = F_{Becken} - F_{Schulter},$$

d.h., ein definierter Kraftfluss, der unabhängig von der Position der Umlenkrolle 1 ist. Beim Einbau eines Energieaufnahmeelementes (Deformationselement 8), beispielsweise am Punkt M, welches mit der Einspannung fest verbunden wird, ist eine Begrenzung der Kraft $F_{Schulter}$ möglich. Solange die Kraft $2*F_{Schulter}$ die Verformungskraft $F_{EA}$ nicht überschreitet, stellt sich ein Gleichgewicht des Systems ein und die Kräfte fließen vollständig in die Einspannung ein. Bei Überschreitung der voreingestellten Verformungskraft $F_{EA}$, beispielsweise 6kN, stellt sich eine Kraft von $F_{Schulter}=3kN$ am Punkt SG ein und die Umlenkrolle 1 setzt sich in Bewegung. Dadurch, dass der Kraftfluss zwischen $F_{Becken}$ und $F_{Einspannung}$, wie bereits beschrieben, bestehen bleibt, kann die Beckensegmentkraft vollständig abgeleitet werden, die Beckensegmentbewegung unterbunden werden und die Schultergurtkraft durch die voreingestellte Kraft $F_{EA}$ begrenzt werden.

Um die definierte Bewegung der Umlenkrolle 1 festzulegen, werden vorzugsweise gemäß Figur 5 längs erstreckte Elemente 3 in Form von Flachbändern, vorzugsweise aus Blech, eingesetzt. Diese Blechelemente werden in geeigneter Weise mit der Schlosszunge 4 verbunden und verlaufen die Mantelfläche der Umlenkrolle 1 entlang, jeweils links und rechts neben dem umgelenkten Sicherheitsgurt 2. An den Enden gehen sie eine feste Verbindung mit der Umlenkrolle 1 ein. Auf diese Weise ist es möglich, einen definierten Abrollweg festzulegen, welcher nach dem Abrollvorgang nicht überschritten wird. In diesem Fall dienen die abgerollten längs erstreckten Elemente 3 als Verbindungsstege zwischen Umlenkrolle 1 und Schlosszunge 4. Die Energieaufnahme geschieht ggf. zusätzlich durch die Dehnung von Deformationselementen 8. Andere Energieaufnahmeprinzipien, welche umgesetzt werden können, sind das Ausziehen von Stiften, Umlenkung und Biegedeformation von Elementen, reiner Zug sowie das Abscheren von Laschen (siehe oben).

Bei der Umlenkrolle 1 gemäß Figur 6, die mittels eines Stiftes 8 mit der Schlosszunge 4 verbunden ist, bewirkt eine Abrollbewegung der Umlenkrolle 1 in Richtung der Schultergurtkraft um den Betrag x einen Auszug des Stiftes 8 um den gleichen Betrag x, da sich beide auf den Punkt M beziehen.

Wenn jedoch der Stift 8 an einer anderen Stelle angebracht wird, beispielsweise am Punkt SG (gestrichelte Linie), dann wandert der Punkt SG um den Betrag 2*x bei einer Abrollbewegung der Umlenkrolle 1 um x. Diese Geometriemerkmale übertragen sich auf die notwendigen Begrenzungskräfte, die der Stift 8 umsetzen muss. Im ersten Fall handelt es sich dabei um die doppelte Schultergurtkraft, im zweiten Fall um die einfache Schultergurtkraft, jedoch bei doppeltem Weg. Energetisch betrachtet ergeben beide Fälle die gleiche umgesetzte Deformationsenergie.

**Patentansprüche**

1. Schlossumlenkeinrichtung für ein Kraftfahrzeug, mit

    - einer Schlosszunge (4) zum Einstecken in eine Schlossschnalle und
    - einem mit der Schlosszunge (4) verbundenen Umlenkkörper (1), der dazu ausgebildet ist, einen Sicherheitsgurt (2) in ein Schultersegment (7) und ein Beckensegment (5) zu unterteilen und derart umzulenken, dass die beiden Segmente (7, 5) in unterschiedlichen Richtungen vom Umlenkkörper (1) abgehen,

    **dadurch gekennzeichnet, dass**
    der Umlenkkörper (1) über zumindest ein längs erstrecktes Element (3) mit der Schlosszunge (4) verbunden ist, das zumindest abschnittsweise um den Umlenkkörper (1) herumgewickelt ist.

2. Schlossumlenkeinrichtung nach Anspruch 1, **dadurch gekennzeichnet, dass** das mindestens eine längs erstreckte Element (3) durch eine am Schultersegment (7) angreifende Kraft, die eine vorbestimmbare Schwellenkraft übersteigt, vom Umlenkkörper (1) abgewickelt wird, um die resultierende, an dem Schultersegment (7) angreifende Kraft zu begrenzen.

3. Schlossumlenkeinrichtung nach Anspruch 1 oder 2, **dadurch gekennzeichnet, dass** sich der Umlenkkörper (1) entlang einer Erstreckungsrichtung (9) längs erstreckt, wobei insbesondere das mindestens eine längs erstreckte Element (3) quer zur Erstreckungsrichtung (9) des Umlenkkörpers (1) um den Umlenkkörper (1) herumgewickelt ist.

4. Schlossumlenkeinrichtung nach Anspruch 3, **dadurch gekennzeichnet, dass** das mindestens eine längs erstreckte Element (3) quer zur Erstreckungsrichtung (9) des Umlenkkörpers (1) um einen Endabschnitt (11) des Umlenkkörpers (1) herumgewickelt ist.

5. Schlossumlenkeinrichtung nach Anspruch 4, **dadurch gekennzeichnet, dass** der Endabschnitt (11) über einen mittleren Abschnitt (12) des Umlenkkörpers (1) mit einem weiteren Endabschnitt (13) des Umlenkkörpers (1) verbunden ist, wobei insbesondere eine parallel zur Erstreckungsrichtung (9) verlaufende Schwerpunktsachse (17) des mittleren Abschnittes (12) nicht mit der gemeinsamen Zylinderachse (16) der Endabschnitte (11, 13) zusammenfällt.

6. Schlossumlenkeinrichtung nach Anspruch 2 oder einem der Ansprüche 3 bis 5 soweit rückbezogen auf Anspruch 2, **dadurch gekennzeichnet, dass** der Umlenkkörper (1) über zumindest ein zusätzliches Deformationselement (8) mit der Schlosszunge (4) verbunden ist, das beim Abwickeln des mindestens einen längs erstreckten Elementes (3) unter Absorption von Energie deformiert wird.

7. Schlossumlenkeinrichtung nach einem der Ansprüche 2 bis 6, **dadurch gekennzeichnet, dass** der Umlenkkörper (1) über ein weiteres längs erstrecktes Element (3) mit der Schlosszunge (4) verbunden ist, das zumindest abschnittsweise um den Umlenkkörper (1) herumgewickelt ist, und dass das weitere längs erstreckte Element (3) durch eine am Schultersegment (7) angreifende Kraft, die jene Schwellenkraft übersteigt, vom Umlenkkörper (1) abgewickelt wird, um die resultierende, an dem Schultersegment (7) angreifende Kraft zu begrenzen, wobei insbesondere das weitere längs erstreckte Element (3) um den weiteren Endabschnitt (13) des Umlenkkörpers (1) gewickelt ist.

8. Schlossumlenkeinrichtung nach einem der vorangegangenen Ansprüche, **dadurch gekennzeichnet, dass** der Umlenkkörper (1) einen Anlagebereich (20) zur Anlage des Sicherheitsgurtes (2) am Umlenkkörper (1) aufweist, wobei der Sicherheitsgurt (2) um den Anlagebereich (20) herumgelegt ist.

9. Schlossumlenkeinrichtung nach den Ansprüchen 2 und 3 und nach Anspruch 8, **dadurch gekennzeichnet, dass** der Anlagebereich (20) dazu ausgebildet ist, derart mit dem Sicherheitsgurt (2) zusammenzuwirken, dass bei einer am Schultersegment (7) angreifenden Kraft, die die vorbestimmbaren Schwellenkraft übersteigt, der am Anlagebereich (20) anliegende Sicherheitsgurt (2) den Umlenkkörper (1) zu einer Drehbewegung mitnimmt, so dass das mindestens eine längs erstreckte Element (3) vom Umlenkkörper (1) abgewickelt wird, wobei insbesondere der Anlagebereich (20) dazu ausgebildet ist, derart mit dem Sicherheitsgurt (2) zusammenzuwirken, dass der Umlenkkörper (1) bei einer am Schultersegment (7) angreifenden Kraft, die die Schwellenkraft übersteigt, durch eine erhöhte Reibung zwischen dem Anlagebereich (20) und dem Sicherheitsgurt (2) vom Sicherheitsgurt (2) mitgenommen wird, wobei jene Reibung zwischen dem Anlagenbereich (20) und dem Sicherheitsgurt (2) bei einer am Schultersegment (7) angreifenden Kraft, die geringer ist als jene Schwellenkraft, ein Entlanggleiten des Sicherheitsgurtes (2) am Umlenkkörper (1) erlaubt, ohne dass dieser durch den Sicherheitsgurt (2) mitgenommen wird.

10. Schlossumlenkeinrichtung nach einem der Ansprüche 8 bis 9, **dadurch gekennzeichnet, dass** der Anlagebereich (20) eine erste und eine zweite Anlagefläche (21, 22) aufweist.

11. Schlossumlenkeinrichtung nach den Ansprüchen 2 und 10, **dadurch gekennzeichnet, dass** der Sicherheitsgurt (2) bei einer am Schultersegment (7) angreifenden Kraft, die kleiner als die vorbestimmbare Schwellenkraft ist, lediglich an der ersten Anlagefläche (21) anliegt, und dass der Sicherheitsgurt (2) bei einer am Schultersegment (7) angreifenden Kraft, die jene Schwellenkraft übersteigt, an der zweiten Anlagefläche (22) anliegt, wobei insbesondere zwischen der zweiten Anlagefläche (22) und dem Sicherheitsgurt (2) eine Reibung herrscht, die ein Mitnehmen des Umlenkkörpers (1) durch den Sicherheitsgurt (2) bewirkt, wenn der Sicherheitsgurt (2) an der zweiten Anlagefläche (22) anliegt, und dass zwischen der ersten Anlagefläche (21) und dem Sicherheitsgurt (2) eine Reibung herrscht, die ein Entlanggleiten des Sicherheitsgurtes (2) am Umlenkkörper (1) ohne Mitnahme des Umlenkkörpers (1) durch den Sicherheitsgurt (2) erlaubt, wenn der Sicherheitsgurt (2) lediglich an der ersten Anlagefläche (21) anliegt.

12. Schlossumlenkeinrichtung nach einem der Ansprüche 10 bis 11, **dadurch gekennzeichnet, dass** die erste Anlagefläche (21) durch eine dem Sicherheitsgurt (2) zugewandte Oberfläche zumindest eines am Umlenkkörper (1) gelagerten, bewegbaren Elementes (30) gebildet ist, und dass die zweite Anlagefläche (22) durch eine dem Sicherheitsgurt (2) zugewandte Oberfläche des mittleren Abschnittes (12) des Umlenkkörpers (1) gebildet ist.

13. Schlossumlenkeinrichtung nach Anspruch 2 oder 9 und nach einem der Ansprüche 10 bis 11, **dadurch gekennzeichnet, dass** die erste Anlagefläche (21) entlang einer Normalen (31) der zweiten Anlagefläche (22) über die zweite Anlagefläche (22) hinaus steht, so dass der Sicherheitsgurt (2) bei einer am Schultersegment (7) angreifenden Kraft, die kleiner als die vorbestimmbare Schwellenkraft ist, lediglich an der ersten Anlagefläche (21) anliegt, und dass der Sicherheitsgurt (2) bei einer am Schultersegment (7) angreifenden Kraft, die jene Schwellenkraft übersteigt, sich derart deformiert, dass er sich an die zweite Anlagefläche (22) anlegt.

14. Schlossumlenkeinrichtung nach Anspruch 13, **gekennzeichnet durch** zumindest einen vom Umlenkkörper (1) abragenden Steg (50), mit einer dem Umlenkkörper (1) abgewandten Oberfläche, die die erste Anlagefläche (21) bildet.

15. Schlossumlenkeinrichtung nach Anspruch 2 oder einem der Ansprüche 3 bis 14soweit rückbezogen auf Anspruch 2, **dadurch gekennzeichnet, dass** das mindestens eine längs erstreckte Element (3) über eine Schwachstelle (3a) mit der Schlosszunge (4) verbunden ist, die beim Abwickeln des mindestens einen längs erstreckten Elementes (3) einreißt.

**Claims**

1. A buckle device for a motor vehicle, comprising

   - a locking tongue (4) for inserting into a buckle and
   - a deflecting body (1) connected to the locking tongue (4), which is configured to subdivide a safety belt (2) into a shoulder portion (7) and a lap portion (5) and to deflect said safety belt such that the two portions (7, 5) extend away from the deflecting body (1) in different directions,

   **characterized in that**
   the deflecting body (1) is connected to the locking tongue (4) via at least one elongate element (3), which is at least partially wound around the deflecting body (1).

2. The buckle device as claimed in claim 1, **characterized in that** the at least one elongate element (3) is unwound from the deflecting body (1) by a force acting on the shoulder portion (7) which exceeds a predeterminable threshold force, in order to limit the resulting force acting on the shoulder portion (7).

3. The buckle device as claimed in claim 1 or 2, **characterized in that** the deflecting body (1) extends in a direction of extension (9), wherein in particular the at least one elongate element (3) is wound around the deflecting body (1) transversely to the direction of extension (9) of the deflecting body (1).

4. The buckle device as claimed in claim 3, **characterized in that** the at least one elongate element (3) is wound around an end portion (11) of the deflecting body (1) transversely to the direction of extension (9) of the deflecting body (1).

5. The buckle device as claimed in claim 4, **characterized in that** the end portion (11) is connected via a central portion (12) of the deflecting body (1) to a further end portion (13) of,the deflecting body (1), wherein in particular a center of gravity axis (17) of the central portion (12) extending parallel to the direction of extension (9) does not coincide with the common cylinder axis (16) of the end portions (11, 13).

6. The buckle device as claimed in claim 2, or one of claims 3 to 5, referring back to claim 2, **characterized in that** the deflecting body (1) is connected to the locking tongue (4) via at least one additional deformation element (8) which, when the at least one elongate element (3) is unwound, is deformed by the absorption of energy.

7. The buckle device as claimed in one of claims 2 to 6, **characterized in that** the deflecting body (1) is connected to the locking tongue (4) via a further elongate element (3), which is wound at least partially around the deflecting body (1), and **in that** the further elongate element (3) is unwound from the deflecting body (1) by a force acting on the shoulder portion (7), which exceeds said threshold force, in order to limit the resulting force acting on the shoulder portion (7), wherein in particular the further elongate element (3) is wound around the further end portion (13) of the deflecting body (1).

8. The buckle device as claimed in one of the preceding claims, **characterized in that** for the bearing of the safety belt (2) against the deflecting body (1), the deflecting body (1) has a bearing region (20), the safety belt (2) being positioned around the bearing region (20).

9. The buckle device as claimed in claims 2 and 3 and as claimed in claim 8, **characterized in that** the bearing region (20) is configured to cooperate with the safety belt (2) such that with a force acting on the shoulder portion (7) which exceeds the predeterminable threshold force, the safety belt (2) bearing against the bearing region (20) drives the deflecting body (1) to a rotational movement, so that the at least one elongate element (3) is unwound from the deflecting body (1), wherein in particular the bearing region (20) is configured to cooperate with the safety belt (2) such that the deflecting body (1), with a force acting on the shoulder portion (7) which exceeds the threshold force, is carried along by the safety belt (2) by an increased friction between the bearing region (20) and the safety belt (2), and **in that** said friction between the bearing region (20) and the safety belt (2) with a force acting on the shoulder portion (7) which is lower than said threshold force, allows the safety belt (2) to slide along the deflecting body (1) without said deflecting body being carried along by the safety belt (2).

10. The buckle device as claimed in one of claims 8 to 9, **characterized in that** the bearing region (20) has a first and a second bearing surface (21, 22).

11. The buckle device as claimed in claims 2 and 10, **characterized in that** the safety belt (2) with a force acting on the shoulder portion (7) which is lower than the predeterminable threshold force only bears against the first bearing surface (21), and **in that** the safety belt (2) with a force acting on the shoulder portion (7) which exceeds said threshold force, bears against the second bearing surface (22), wherein in particular a friction prevails between the second bearing surface (22) and the safety belt (2), which causes the deflecting body (1) to be carried along by the safety belt (2), when the safety belt (2) bears against the second bearing surface (22) and **in that** between the first bearing surface (21) and the safety belt (2) a friction prevails, which allows the safety belt (2) to slide along the deflecting body (1) without the deflecting body (1) being carried along by the safety belt (2), when the safety belt (2) only bears against the first bearing surface (21).

12. The buckle device as claimed in one of claims 10 to 11, **characterized in that** the first bearing surface (21) is formed by a surface facing the safety belt (2) of at least one movable element (30) mounted on the deflecting body (1) and **in that** the second bearing surface (22) is formed by a surface of the central portion (12) of the deflecting body (1) facing the safety belt (2).

13. The buckle device as claimed in claim 2 or 9 and as claimed in one of claims 10 to 11, **characterized in that** the first bearing surface (21) projects beyond the second bearing surface (22), along a normal (31) of the second bearing surface (22), so that the safety belt (2) with a force acting on the shoulder portion (7) which is lower than the predeterminable threshold force, only bears against the first bearing surface (21), and **in that** the safety belt (2) with a force acting on the shoulder portion (7) which exceeds said threshold force, is deformed such that it bears against the second bearing surface (22).

14. The buckle device as claimed in claim 13, **characterized by** at least one projection (50) projecting from the deflecting body (1) with a surface remote from the deflecting body (1) which forms the first bearing surface (21).

15. The buckle device as claimed in claim 2, or one of claims 3 to 14, referring back to claim 2, **characterized in that** the at least one elongate element (3), is connected to the locking tongue (4) via a weak point (3a), which tears when the at least one elongate element (3) is unwound.

**Revendications**

1. Dispositif de verrou à renvoi pour un véhicule automobile, comprenant

   - une languette de verrou (4) à enficher dans une boucle de verrou, et
   - un corps de renvoi (1), relié à la languette de verrou (4), qui est réalisé afin de subdiviser une ceinture de sécurité (2) en un segment d'épaule (7) et un segment de bassin (5) et de la renvoyer de telle manière que les deux segments (7, 5) partent du corps de renvoi (1) dans des directions différentes,

   **caractérisé en ce que**
   le corps de renvoi (1) est relié à la languette de verrou (4) via au moins un élément (3) allongé en longueur, qui est enroulé au moins par tronçon autour du corps de renvoi (1).

2. Dispositif de verrou à renvoi selon la revendication 1, **caractérisé en ce que** ledit au moins un élément (3) allongé en longueur est déroulé du corps de renvoi (1) par une force attaquant le segment d'épaule (7) qui dépasse une force de seuil prédéterminée, afin de limiter la force résultante attaquant le segment d'épaule (7).

3. Dispositif de verrou à renvoi selon la revendication 1 ou 2, **caractérisé en ce que** le corps de renvoi (1) s'étend le long d'une direction d'extension (9), et en particulier ledit au moins un élément (3) allongé en longueur est enroulé autour du corps de renvoi (1) transversalement à la direction d'extension (9) du corps de renvoi (1).

4.  Dispositif de verrou à renvoi selon la revendication 3, **caractérisé en ce que** ledit au moins un élément (3) allongé en longueur est enroulé autour d'un tronçon terminal (11) du corps de renvoi (1) transversalement à la direction d'extension (9) du corps de renvoi (1).

5.  Dispositif de verrou à renvoi selon la revendication 4, **caractérisé en ce que** le tronçon terminal (11) est relié à un autre tronçon terminal (13) du corps de renvoi (1) au moyen d'un tronçon médian (12) du corps de renvoi (1), et en particulier un axe de gravité (17), s'étendant parallèlement à la direction d'extension (9), du tronçon médian (12) ne coïncide pas avec l'axe cylindrique commun (16) des tronçons terminaux (11, 13).

6.  Dispositif de verrou à renvoi selon la revendication 2 ou l'une des revendications 3 à 5 prise en dépendance de la revendication 2, **caractérisé en ce que** le corps de renvoi (1) est relié à la languette de verrou (4) via au moins un élément à déformation additionnel (8) qui est déformé en absorbant de l'énergie lors du déroulement dudit au moins un élément (3) allongé en longueur.

7.  Dispositif de verrou à renvoi selon l'une des revendications 2 à 6, **caractérisé en ce que** le corps de renvoi (1) est relié à la languette de verrou (4) via un autre élément (3) allongé en longueur, qui est enroulé au moins par tronçon autour du corps de renvoi (1), et **en ce que** ledit autre élément (3) allongé en longueur est déroulé du corps de renvoi (1) par une force attaquant le segment d'épaule (7) qui dépasse la force de seuil précitée, afin de limiter la force résultante attaquant le segment d'épaule (7), et ledit autre élément (3) allongé en longueur est en particulier enroulé autour de l'autre tronçon terminal (13) du corps de renvoi (1).

8.  Dispositif de verrou à renvoi selon l'une des revendications précédentes, **caractérisé en ce que** le corps de renvoi (1) présente une zone d'appui (20) pour l'appui de la ceinture de sécurité (2) sur le corps de renvoi (1), la ceinture de sécurité (2) étant posée tout autour de la zone d'appui (20).

9.  Dispositif de verrou à renvoi selon les revendications 2 et 3 et selon la revendication 8, **caractérisé en ce que** la zone d'appui (20) est réalisée de manière à coopérer avec la ceinture de sécurité (2) de telle façon que sous une force attaquant le segment d'épaule (7) qui dépasse la force de seuil prédéterminé, la ceinture de sécurité (2) en appui sur la zone d'appui (20) entraîne le corps de renvoi (1) en un mouvement de rotation, de sorte que ledit au moins un élément (3) allongé en longueur est déroulé du corps de renvoi (1), et la zone d'appui (20) et en particulier réalisée de manière à coopérer avec la ceinture de sécurité (2) de telle façon que le corps de renvoi (1), sous une force attaquant le segment d'épaule (7) qui dépasse la force seuil, est entraîné par la ceinture de sécurité (2) par augmentation de la friction entre la zone d'appui (20) et la ceinture de sécurité (2), et ladite friction entre la zone d'appui (20) et la ceinture de sécurité (2) permettant, lorsque la force attaquant le segment d'épaule (7) est plus faible que la force seuil précitée, un coulissement de la ceinture de sécurité (2) le long du corps de renvoi (1) sans que celui-ci soit entraîné par la ceinture de sécurité (2).

10. Dispositif de verrou à renvoi selon l'une des revendications 8 et 9, **caractérisé en ce que** la zone d'appui (20) comprend une première et une seconde surface d'appui (21, 22).

11. Dispositif de verrou à renvoi selon les revendications 2 et 10, **caractérisé en ce que**, lorsque la force attaquant le segment d'épaule (7) est plus faible que la force seuil prédéterminée, la ceinture de sécurité (2) s'appuie uniquement sur la première surface d'appui (21), et **en ce que** lorsque la force attaquant le segment d'épaule (7) dépasse la force seuil précitée, la ceinture de sécurité (2) s'appuie sur la seconde surface d'appui (22), et entre la seconde surface d'appui (22) et la ceinture de sécurité (2) il règne en particulier une friction qui provoque un entraînement du corps de renvoi (1) par la ceinture de sécurité (2) quand la ceinture de sécurité (2) s'appuie sur la seconde surface d'appui (2), et entre la première surface d'appui (21) et la ceinture de sécurité (2) il règne une friction qui permet à la ceinture de sécurité (2) de coulisser le long du corps de renvoi (1) sans entraînement du corps de renvoi (1) par la ceinture de sécurité (2) quand la ceinture de sécurité (2) s'appuie uniquement sur la seconde surface d'appui (21).

12. Dispositif de verrou à renvoi selon l'une des revendications 10 et 11, **caractérisé en ce que** la première surface d'appui (21) est formée par une surface, tournée vers la ceinture de sécurité (2), d'au moins un élément mobile (30) monté sur le corps de renvoi (1), et **en ce que** la surface d'appui (22) est formée par une surface, tournée vers la ceinture de sécurité (2), du tronçon médian (12) du corps renvoi (1).

**13.** Dispositif de verrou à renvoi selon la revendication 2 ou 9 et selon l'une des revendications 10 et 11, **caractérisé en ce que** la première surface d'appui (21) dépasse au-delà de la seconde surface d'appui (22) le long d'une normale (31) à la seconde surface d'appui (22), de sorte que sous une force attaquant le segment d'épaule (7) qui est inférieure à la force seuil prédéterminée, la ceinture de sécurité (2) s'appuie uniquement sur la première surface d'appui (21), et lorsque la force attaquant le segment d'épaule (7) dépasse la force seuil précitée, la ceinture de sécurité (2) se déforme de telle façon qu'elle s'appuie sur la seconde surface d'appui (22).

**14.** Dispositif de verrou à renvoi selon la revendication 13, **caractérisé par** au moins une barrette (50), qui dépasse du corps de renvoi (1), avec une surface détournée du corps de renvoi (1) qui forme la première surface d'appui (21).

**15.** Dispositif de verrou à renvoi selon la revendication 2 ou l'une des revendications 3 à 14 prise en dépendance de la revendication 2, **caractérisé en ce que** ledit au moins un élément (3) allongé en longueur est relié à la languette de verrou (4) par un emplacement affaibli (3a) qui se déchire lors du déroulement dudit au moins un élément (3) allongé en longueur.

# FIG 1

# FIG 2

## FIG 3

SG

1

r

M

16

$F_{Becken}$

5

⊗ 9

r

MP

3

$F_{Einspannung}$

## FIG 4

2

7

SG

1

$F_{Schulter}$

8

r

M

$F_{EA}=2*F_{Schulter}$

16

$F_{Becken}$

5

⊗ 9

r

MP

3

$F_{Einspannung}$

## FIG 5

## FIG 6

**FIG 7**

**FIG 8**

FIG 9

FIG 10

**FIG 11**

**FIG 12**

FIG 13

FIG 14

**FIG 15**

**FIG 16**

FIG 17

FIG 18

**FIG 19**

**FIG 20**

FIG 21

FIG 22

FIG 23

FIG 24

FIG 25

FIG 26

FIG 27

SG

7  2  14  17  ⊗9

15  20

1 →

3

5  16  11  12  4

MP  15a

FIG 28

7  2  SG  ⊗9

15

17a

1 →  12

17  20

3  16

5  14 MP  11  4

FIG 29

7  2  14  SG

⊗9

11  20

3  17

16

1

5  MP  12  15  4

FIG 30

FIG 31

FIG 32

FIG 33

FIG 34

FIG 35

FIG 36

FIG 37

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3233797 C1